# EUROPEAN PATENT APPLICATION

(11) **EP 3 641 276 A1**
(43) Date of publication of application: **22.04.2020**
(21) Application number: 17922294.8
(22) Date of filing: 05.09.2017
(51) Int. Cl.: H04L 29/12

(54) **METHOD FOR CREATING STATISTICS OF TRAFFIC AND DEVICE THEREFOR**

(30) Priority: 23.08.2017 CN 201710727381
(71) Applicant: Huawei Technologies Co., Ltd., Longgang District Shenzhen, Guangdong 518129 (CN)
(72) Inventor: HUANG, Chaozhi, Shenzhen Guangdong 518129 (CN); DAI, Shiquan, Shenzhen Guangdong 518129 (CN)
(74) Representative: Gill Jennings & Every LLP
(86) International application number: PCT/CN2017/100455
(87) International publication number: WO 2019/037156

(57) **Abstract**

This application discloses a traffic statistics collection method and a device thereof, applied to an in-vehicle service interaction system. The method in this application includes: when an in-vehicle infotainment IVI system performs a first service, communicating, by a telematics box T-box, with the IVI by using a first private IP address, and communicating, by the T-box, with a telematics service provider TSP by using a first APN and a first external IP address corresponding to the first private IP; and when the IVI performs a second service, communicating, by the T-box, with the IVI by using a second private IP address, and communicating, by the T-box, with the TSP by using a second APN and a second external IP address corresponding to the second private IP address.

## Description

This application claims priority to Chinese Patent Application No. 201710727381.7, filed with the China National Intellectual Property Administration on August 23, 2017 and entitled "METHOD FOR COLLECTING STATISTICS ON VEHICLE-MACHINE SERVICE TRAFFIC THROUGH CLASSIFICATION AND DEVICE", which is incorporated herein by reference in its entirety.

### TECHNICAL FIELD

This application relates to the communications field, and in particular, to a traffic statistics collection method and a device thereof.

### BACKGROUND

As the internet of vehicles emerges, people have an increasingly higher requirement for in-vehicle infotainment, and telematics boxes (Telematics Box, T-Box) are mounted on an increasing quantity of passenger cars. The T-box can not only provide rich content provider (Telematics Service Provider, TSP) services, such as remote control, remote diagnosis, and emergency call, but also provide a data service channel for an in-vehicle infotainment (In-Vehicle Infotainment, IVI) system, so that the IVI can support more entertainment applications, such as online music, weather, news, real-time transportation, an inbox, and a stock.

For a T-box service, the T-box can identify different services, and select a corresponding external IP address based on a tariff package corresponding to a specific service and the tariff package to communicate with a server. For the IVI, an existing T-box can assign a private IP address to the IVI, so that when performing a service, the IVI communicates with the T-box by using the private IP address. However, one data channel is currently used for all IVI services. Consequently, a requirement for charging through classification cannot be met.

### SUMMARY

Embodiments of this application provide a traffic statistics collection method and a device thereof, applied to an in-vehicle service interaction system, to separately collect statistics on traffic of different services.

A first aspect of an embodiment of this application provides a traffic statistics collection method, applied to an in-vehicle service interaction system. The method includes:
When IVI performs a first service, a T-box may communicate with the IVI by using a first private IP address, so that the T-box can communicate with a TSP by using a first APN and a first external IP address corresponding to the first private IP address. However, when the IVI performs a second service, the T-box may communicate with the IVI by using a second private IP address, so that the T-box communicates with the TSP by using a second APN and a second external IP address corresponding to the second private IP address.

Because the first APN collects statistics on data traffic of the first service based on the first external IP address, and the second APN collects statistics on data traffic of the second service based on the second external IP address. Therefore, a problem that statistics on traffic of different services are separately collected is resolved.

In some possible implementations, the T-box receives a configuration message sent by the TSP, and forwards the configuration message to the IVI. The configuration message includes that the first service corresponds to the first APN and the second service corresponds to the second APN. Therefore, the TSP may dynamically adjust a correspondence between a service and an APN, to help a vehicle dealer flexibly adjust a service package rule, and cooperate with a business package plan.

In some possible implementations, the T-box may be connected to the IVI through Wi-Fi or a USB, to implement a flexible connection between the T-box and the IVI.

In some possible implementations, the first service or the second service is a traffic free service and a traffic charging service, and the TSP may perform different charging policies on different services.

In some possible implementations, the T-box may determine that the first private IP address, the first APN, and the first external IP address are corresponding to each other and the second private IP address, the second APN, and the second external IP address are corresponding to each other, and assign the first private IP address and the second private IP address to the IVI. Therefore, when the private IP address and the external IP address are changed, the APN may still be corresponding to a service used by the IVI, to collect statistics on data traffic of different services.

A second aspect of an embodiment of this application provides a traffic statistics collection method, applied to an in-vehicle service interaction system. The method includes:
A T-box receives a configuration message sent by a TSP, and forwards the configuration message to IVI. The configuration message includes that a first service corresponds to a first APN and a second service corresponds to a second APN. Therefore, the TSP may dynamically adjust a correspondence between a service and an APN, to help a vehicle dealer flexibly adjust a service package rule, and cooperate with a business package plan. In some possible implementations, the T-box may be connected to the IVI through Wi-Fi or a USB, to implement a flexible connection between the T-box and the IVI.

The T-box may determine that the first private IP address, the first APN, and the first external IP address are corresponding to each other, and the second private IP address, the second APN, and the second external IP address are corresponding to each other, and assign the first private IP address and the second private IP address to the IVI. Therefore, when the private IP address and the external IP address are changed, the APN may still be corresponding to a service used by the IVI, to collect statistics on data traffic of different services.

When the IVI performs the first service, the T-box may communicate with the IVI by using the first private IP address, so that the T-box can communicate with the TSP by using the first APN and the first external IP address corresponding to the first private IP address. However, when the IVI performs the second service, the T-box may communicate with the IVI based on the second private IP address, so that the T-box communicates with the TSP by using the second APN and the second external IP address corresponding to the second private IP address. In some possible implementations, the first service or the second service is a traffic free service and a traffic charging service, and the TSP may perform different charging policies on different services.

Because the first APN collects statistics on data traffic of the first service based on the first external IP address, and the second APN collects statistics on data traffic of the second service based on the second external IP address. Therefore, a problem that statistics on traffic of different services are separately collected is resolved.

A third aspect of an embodiment of this application provides a traffic statistics collection method, applied to an in-vehicle service interaction system. The method includes:
When performing a first service, IVI may communicate with a T-box by using a first private IP address, so that the T-box communicates with a TSP by using a first APN and a first external IP address corresponding to the first private IP address. When performing the second service, the IVI may communicate with the T-box by using a second private IP address, so that the T-box communicates with the TSP by using a second APN and a second external IP address corresponding to the second private IP address. Because the first APN may collect statistics on data traffic of the first service based on the first external IP address, and the second APN collects statistics on data traffic of the second service based on the second external IP address. Therefore, a problem that statistics on traffic of different services are separately collected is resolved.

In some possible implementations, the IVI may receive a configuration message that is sent by the TSP and that is forwarded by the T-box. The configuration message includes that the first service corresponds to the first APN and the second service corresponds to the second APN. The TSP may dynamically adjust a correspondence between a service and an APN, to help a vehicle dealer flexibly adjust a service package rule, and cooperate with a business package plan.

In some possible implementations, the T-box may be connected to the IVI through Wi-Fi or a USB, to implement a flexible connection between the T-box and the IVI.

In some possible implementations, the first service or the second service may be a traffic free service or a traffic charging service, and therefore, the TSP may perform different charging policies on different services.

In some possible implementations, the IVI may receive the first private IP address and the second private IP address that are assigned by the T-box. The IVI determines that the first private IP address corresponds to the first APN and the second private IP address corresponds to the second APN, so that when the private IP address and the external IP address are changed, the APN may still be corresponding to a service used by the IVI, to implement statistics collection of data traffic performed by different APNs on different services.

A fourth aspect of an embodiment of this application provides a traffic statistics collection method, applied to an in-vehicle service interaction system. The method includes:
A IVI may receive a first private IP address and a second private IP address that are assigned by a T-box. The IVI determines that the first private IP address corresponds to a first APN and the second private IP address corresponds to a second APN, so that when the private IP address and the external IP address are changed, the APN may still be corresponding to a service used by the IVI, to implement statistics collection of data traffic performed by different APNs on different services. The T-box may be connected to the IVI through Wi-Fi or a USB, to implement a flexible connection between the T-box and the IVI.

When performing a first service, IVI may communicate with the T-box by using the first private IP address, so that the T-box communicates with a TSP by using the first APN and a first external IP address corresponding to the first private IP address. When performing the second service, the IVI may communicate with the T-box based on the second private IP address, so that the T-box communicates with the TSP by using the second APN and a second external IP address corresponding to the second private IP address. Because the first APN may collect statistics on data traffic of the first service based on the first external IP address, and the second APN collects statistics on data traffic of the second service based on the second external IP address. Therefore, a problem that statistics on traffic of different services are separately collected is resolved. In some possible implementations, the first service or the second service may be a traffic free service or a traffic charging service, and therefore, the TSP may perform different charging policies on different services.

The IVI may receive a configuration message that is sent by the TSP and that is forwarded by the T-box. The configuration message includes that the first service corresponds to the first APN and the second service corresponds to the second APN. The TSP may dynamically adjust a correspondence between a service and an APN, to help a vehicle dealer flexibly adjust a service package rule, and cooperate with a business package plan.

Because the first APN collects statistics on data traffic of the first service based on the first external IP address, and the second APN collects statistics on data traffic of the second service based on the second external IP address. Therefore, a problem that statistics on traffic of different services are separately collected is resolved.

A fifth aspect of an embodiment of this application provides a T-box, applied to an in-vehicle service interaction system. The T-box includes a private network communications module, configured to: when IVI performs a first service, communicate with the IVI by using a first private IP address, so that an external network communications module may be configured to communicate with a TSP by using a first APN and a first external IP address corresponding to the first private IP address. The private network communications module may further be configured to: when the IVI performs a second service, communicate with the IVI by using a second private IP address, so that the external network communications module can communicate with the TSP by using a second APN and a second external IP address corresponding to the second private IP address. Because the first APN collects statistics on data traffic of the first service based on the first external IP address, and the second APN collects statistics on data traffic of the second service based on the second external IP address. Therefore, a problem that statistics on traffic of different services are separately collected is resolved.

In some possible implementations, the T-box includes a transceiver module, configured to forward, to the IVI, a configuration message sent by the TSP. The configuration message includes that the first service corresponds to the first APN and the second service corresponds to the second APN. The TSP may dynamically adjust a correspondence between a service and an APN, to help a vehicle dealer flexibly adjust a service package rule, and cooperate with a business package plan.

In some possible implementations, the T-box may further include a processor, configured to: determine that the first private IP address, the first APN, and the first external IP address are corresponding to each other and the second private IP address, the second APN, and the second external IP address are corresponding to each other; and assign the first private IP address and the second private IP address to the IVI. When the private IP address and the external IP address are changed, an APN may still be corresponding to a service used by the IVI, to collect statistics on data traffic of different services.

A sixth aspect of an embodiment of this application provides a T-box, applied to an in-vehicle service interaction system. The T-box includes a processor, configured to: determine that a first private IP address, a first APN, and a first external IP address are corresponding to each other and a second private IP address, a second APN, and a second external IP are corresponding to each other; and assign the first private IP address and the second private IP address to a IVI. When the private IP address and the external IP address are changed, an APN may still be corresponding to a service used by the IVI, to collect statistics on data traffic of different services.

The T-box further includes a communications module. The communications module is configured to: when the IVI performs a first service, communicate with the IVI by using the first private IP address, to communicate with a TSP by using the first APN and the first external IP address corresponding to the first private IP address. The communications module may further be configured to: when the IVI performs a second service, communicate with the IVI based on the second private IP address, to communicate with the TSP by using the second APN and the second external IP address corresponding to the second private IP address. Because the first APN collects statistics on data traffic of the first service based on the first external IP address, and the second APN collects statistics on data traffic of the second service based on the second external IP address. Therefore, a problem that statistics on traffic of different services are separately collected is resolved.

The T-box includes a transceiver module. The transceiver module may forward, to the IVI, a configuration message sent by the TSP. The configuration message includes that the first service corresponds to the first APN and the second service corresponds to the second APN. The TSP may dynamically adjust a correspondence between a service and an APN, to help a vehicle dealer flexibly adjust a service package rule, and cooperate with a business package plan. Because the first APN collects statistics on data traffic of the first service based on the first external IP address, and the second APN collects statistics on data traffic of the second service based on the second external IP address. Therefore, a problem that statistics on traffic of different services are separately collected is resolved.

A seventh aspect of an embodiment of this application provides IVI, applied to an in-vehicle service interaction system. The IVI includes a processor and a communications module. The processor is configured to perform a first service and/or a second service. The communications module is configured to communicate with a T-box by using a first private IP address, so that the T-box communicates with a TSP by using a first APN and a first external IP address corresponding to the first private IP address. In addition, the communications module may communicate with the T-box by using a second private IP address, so that the T-box communicates with the TSP by using a second APN and a second external IP address corresponding to the second private IP address.

Because the first APN collects statistics on data traffic of the first service based on the first external IP address, and the second APN collects statistics on data traffic of the second service based on the second external IP address. Therefore, a problem that statistics on traffic of different services are separately collected is resolved.

In some possible implementations, the IVI further includes a transceiver module. The transceiver module may be configured to receive a configuration message that is sent by the TSP and that is forwarded by the T-box. The configuration message includes that the first service corresponds to the first APN and the second service corresponds to the second APN. The TSP may dynamically adjust a correspondence between a service and an APN, to help a vehicle dealer flexibly adjust a service package rule, and cooperate with a business package plan.

In some possible implementations, the transceiver module may further receive the first private IP address and the second private IP address that are assigned by the T-box, and determine that the first private IP address corresponds to the first APN and the second private IP address corresponds to the second APN, so that when the private IP address and the external IP address are changed, the APN may still be corresponding to a service used by the IVI, to collect statistics on data traffic of different services.

An eighth aspect of an embodiment of this application provides IVI, applied to an in-vehicle service interaction system. The IVI includes a processor and a communications module. The processor is configured to perform a first service and/or a second service. The communications module is configured to communicate with a T-box by using a first private IP address, so that the T-box can communicate with a TSP by using a first APN and a first external IP address corresponding to the first private IP address. In addition, the communications module may communicate with the T-box by using a second private IP address, so that the T-box communicates with the TSP by using a second APN and a second external IP address corresponding to the second private IP address.

The IVI further includes a transceiver module. The transceiver module may be configured to receive a configuration message that is sent by the TSP and that is forwarded by the T-box. The configuration message includes that the first service corresponds to the first APN and the second service corresponds to the second APN. The TSP may dynamically adjust a correspondence between a service and an APN, to help a vehicle dealer flexibly adjust a service package rule, and cooperate with a business package plan.

The transceiver module may further receive the first private IP address and the second private IP address that are assigned by the T-box, and determine that the first private IP address corresponds to the first APN and the second private IP address corresponds to the second APN, so that when the private IP address and the external IP address are changed, the APN may still be corresponding to a service used by the IVI, to collect statistics on data traffic of different services.

Because the first APN collects statistics on data traffic of the first service based on the first external IP address, and the second APN collects statistics on data traffic of the second service based on the second external IP address. Therefore, a problem that statistics on traffic of different services are separately collected is resolved.

A ninth aspect of an embodiment of this application provides a T-box, applied to an in-vehicle service interaction system. The T-box includes one or more processors, a memory, a plurality of application programs, and one or more programs. The one or more programs are stored in the memory, the one or more programs include an instruction, and when the instruction is executed by the electronic device, the electronic device is enabled to perform the following steps: When IVI performs a first service, the T-box communicates with the IVI by using a first private IP address and communicates with a TSP by using a first APN and a first external IP address corresponding to the first private IP address. When the IVI performs a second service, the T-box communicates with the IVI by using a second private IP address and communicates with the TSP by using a second APN and a second external IP address corresponding to the second private IP address.

Because the first APN collects statistics on data traffic of the first service based on the first external IP address, and the second APN collects statistics on data traffic of the second service based on the second external IP address. Therefore, a problem that statistics on traffic of different services are separately collected is resolved.

In some possible implementations, the at least one processor in the T-box executes the several instructions to enable the input device to further forward, to the IVI, a configuration message sent by the TSP. The configuration message includes that the first service corresponds to the first APN and the second service corresponds to the second APN. The TSP may dynamically adjust a correspondence between a service and an APN, to help a vehicle dealer flexibly adjust a service package rule, and cooperate with a business package plan.

In some possible implementations, the at least one processor in the T-box executes the several instructions to enable the input device to further determine that the first private IP address, the first APN, and the first external IP address are corresponding to each other and the second private IP address, the second APN, and the second external IP address are corresponding to each other, and assign the first private IP address and the second private IP address to the IVI. Therefore, when the private IP address and the external IP address are changed, the APN may still be corresponding to a service used by the IVI, to collect statistics on data traffic of different services.

A tenth aspect of an embodiment of this application provides a T-box, applied to an in-vehicle service interaction system. The T-box includes: one or more processors, a memory, a plurality of application programs, and one or more programs. The one or more programs are stored in the memory, the one or more programs include an instruction, and when the instruction is executed by the electronic device, the electronic device is enabled to determine that a first private IP address, a first APN, and a first external IP address are corresponding to each other and a second private IP address, a second APN, and a second external IP address are corresponding to each other, and assign the first private IP address and the second private IP address to IVI. Therefore, when the private IP address and the external IP address are changed, an APN may still be corresponding to a service used by the IVI, to collect statistics on data traffic of different services.

When the IVI performs a first service, the T-box communicates with the IVI by using the first private IP address and communicates with a TSP by using the first APN and the first external IP address corresponding to the first private IP address. When the IVI performs a second service, the T-box communicates with the IVI by using a second private IP address and communicates with the TSP by using a second APN and a second external IP address corresponding to the second private IP address.

Because the first APN collects statistics on data traffic of the first service based on the first external IP address, and the second APN collects statistics on data traffic of the second service based on the second external IP address. Therefore, a problem that statistics on traffic of different services are separately collected is resolved.

The at least one processor in the T-box executes the several instructions to enable the input device to further forward, to the IVI, a configuration message sent by the TSP. The configuration message includes that the first service corresponds to the first APN and the second service corresponds to the second APN. The TSP may dynamically adjust a correspondence between a service and an APN, to help a vehicle dealer flexibly adjust a service package rule, and cooperate with a business package plan.

Because the first APN collects statistics on data traffic of the first service based on the first external IP address, and the second APN collects statistics on data traffic of the second service based on the second external IP address. Therefore, a problem that statistics on traffic of different services are separately collected is resolved.

An eleventh aspect of an embodiment of this application provides an electronic device, applied to an in-vehicle service interaction system. The IVI includes one or more processors, a memory, a plurality of application programs, and one or more programs. The one or more programs are stored in the memory, the one or more programs include an instruction, and when the instruction is executed by the electronic device, the electronic device is enabled to perform a first service and/or a second service. When performing the first service, the electronic device communicates with a T-box by using a first private IP address, so that the T-box communicates with a TSP by using a first APN and a first external IP address corresponding to the first private IP address. When performing the second service, the electronic device may communicate with the T-box by using a second private IP address, so that the T-box communicates with the TSP by using a second APN and a second external IP address corresponding to the second private IP address.

Because the first APN collects statistics on data traffic of the first service based on the first external IP address, and the second APN collects statistics on data traffic of the second service based on the second external IP address. Therefore, a problem that statistics on traffic of different services are separately collected is resolved.

In some possible implementations, the at least one processor in the T-box executes the several instructions to enable the input device to further receive a configuration message that is sent by the TSP and that is forwarded by the T-box. The configuration message includes that the first service corresponds to the first APN and the second service corresponds to the second APN. The TSP can dynamically adjust the correspondence between the service and the APN, to help a vehicle dealer flexibly adjust a service package rule, and cooperate with a business package plan.

In some possible implementations, the at least one processor in the T-box executes the several instructions to enable the input device to further receive the first private IP address and the second private IP address that are assigned by the T-box. The IVI determines that the first private IP address corresponds to the first APN and the second private IP address corresponds to the second APN. Therefore, when the private IP address and the external IP address are changed, an APN may still be corresponding to a service used by the IVI, to collect statistics on data traffic of different services.

A twelfth aspect of an embodiment of this application provides an electronic device, applied to an in-vehicle service interaction system. The IVI includes one or more processors, a memory, a plurality of application programs, and one or more programs. The one or more programs are stored in the memory, the one or more programs include an instruction, and when the instruction is executed by the electronic device, the electronic device is enabled to receive a configuration message that is sent by a TSP and that is forwarded by a T-box. The configuration message includes that a first service corresponds to a first APN and a second service corresponds to a second APN. The TSP can dynamically adjust the correspondence between the service and the APN, to help a vehicle dealer flexibly adjust a service package rule, and cooperate with a business package plan.

When performing the first service, the IVI communicates with the T-box by using a first private IP address, so that the T-box communicates with the TSP by using the first APN and a first external IP address corresponding to the first private IP address. When performing the second service, the IVI may communicate with the T-box by using a second private IP address, so that the T-box communicates with the TSP by using the second APN and a second external IP address corresponding to the second private IP address.

Because the first APN collects statistics on data traffic of the first service based on the first external IP address, and the second APN collects statistics on data traffic of the second service based on the second external IP address. Therefore, a problem that statistics on traffic of different services are separately collected is resolved.

The at least one processor in the IVI executes the several instructions to enable the input device to further receive the first private IP address and the second private IP address that are assigned by the T-box, and determine that the first private IP address corresponds to the first APN and the second private IP address corresponds to the second APN. Therefore, when the private IP address and the external IP address are changed, an APN may still be corresponding to a service used by the IVI, to collect statistics on data traffic of different services.

Because the first APN collects statistics on data traffic of the first service based on the first external IP address, and the second APN collects statistics on data traffic of the second service based on the second external IP address. Therefore, a problem that statistics on traffic of different services are separately collected is resolved.

A thirteenth aspect of an embodiment of this application provides a computer program product. When the computer program product runs on an electronic device, the T-box is enabled to perform the methods in the foregoing aspects.

A fourteenth aspect of an embodiment of this application provides a computer program product. When the computer program product runs on an electronic device, the IVI is enabled to perform the methods in the foregoing aspects.

A fifteenth aspect of an embodiment of this application provides a computer readable storage medium including an instruction. When the instruction runs on an electronic device, the T-box is enabled to perform the methods in the foregoing aspects.

A sixteenth aspect of an embodiment of this application provides a computer readable storage medium including an instruction. When the instruction runs on an electronic device, the IVI is enabled to perform the methods in the foregoing aspects.

In the technical solutions provided in the embodiments of this application, when IVI performs a first service, a T-box communicates with the IVI by using a first private IP address, and the T-box communicates with a TSP by using a first APN and a first external IP address corresponding to the first private IP address. When the IVI performs a second service, the T-box communicates with the IVI by using a second private IP address, and the T-box communicates with the TSP by using a second APN and a second external IP address corresponding to the second private IP address. Because the first APN collects statistics on data traffic of the first service based on the first external IP address, and the second APN collects statistics on data traffic of the second service based on the second external IP address, the infotainment device separately collect statistics on traffic of different services.

### BRIEF DESCRIPTION OF DRAWINGS

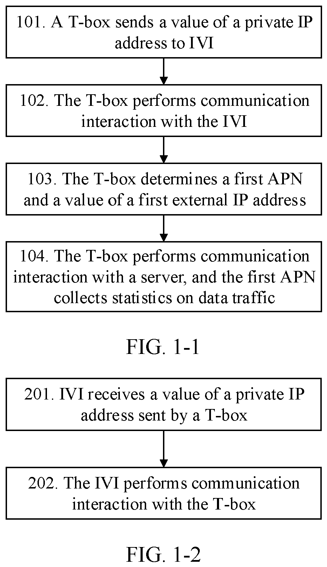

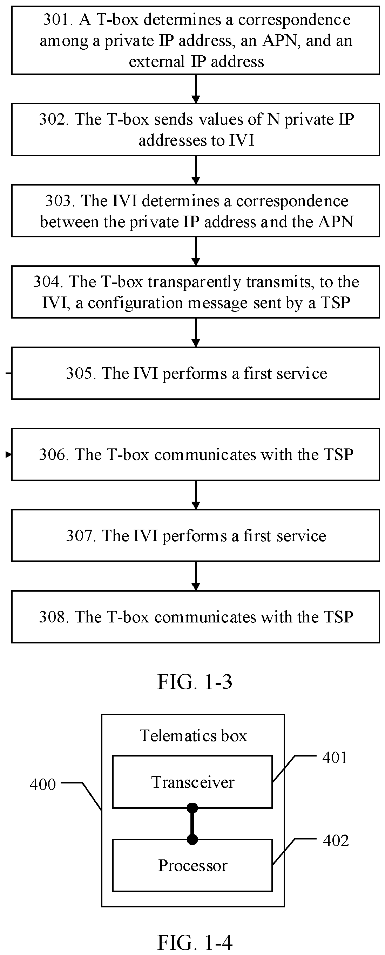

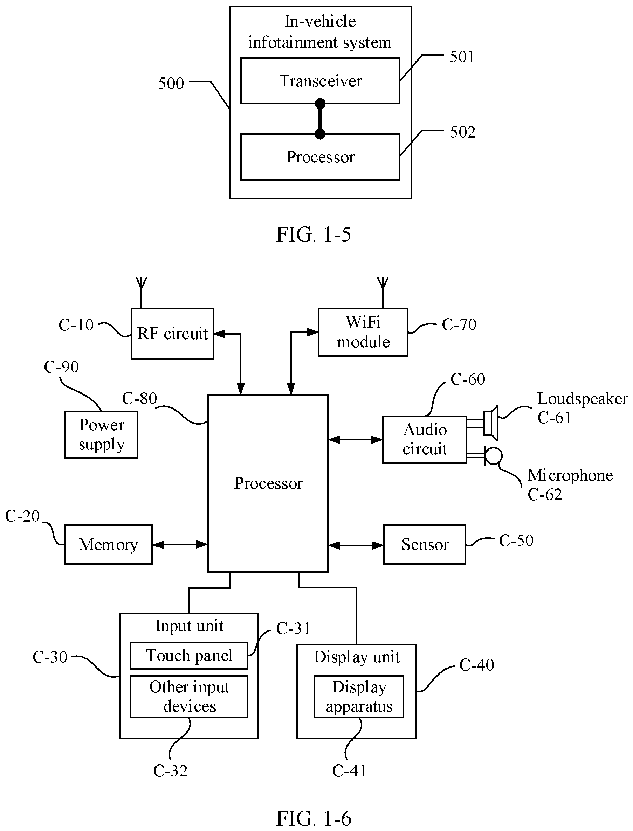

FIG. 1-1 is a schematic diagram of a traffic statistics collection method according to an embodiment of this application;
FIG. 1-2 is a schematic diagram of another traffic statistics collection method according to an embodiment of this application;
FIG. 1-3 is a schematic diagram of another traffic statistics collection method according to an embodiment of this application;
FIG. 1-4 is a schematic diagram of a T-box according to an embodiment of this application;
FIG. 1-5 is a schematic diagram of IVI according to an embodiment of this application;
FIG. 1-6 is a schematic diagram of components of a terminal;
FIG. 2-1 is a schematic architectural diagram of an in-vehicle infotainment interaction system;
FIG. 2-2 is a schematic diagram of communication between IVI and a T-box in the prior art;

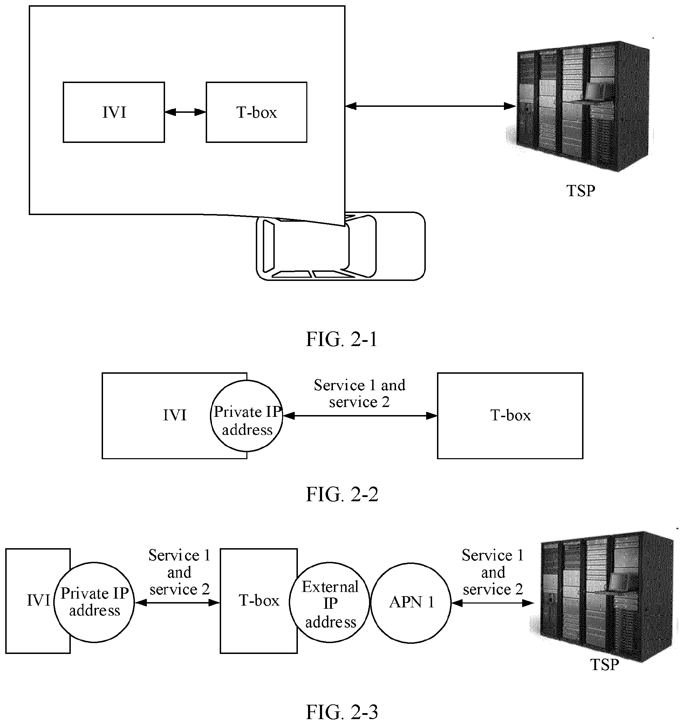

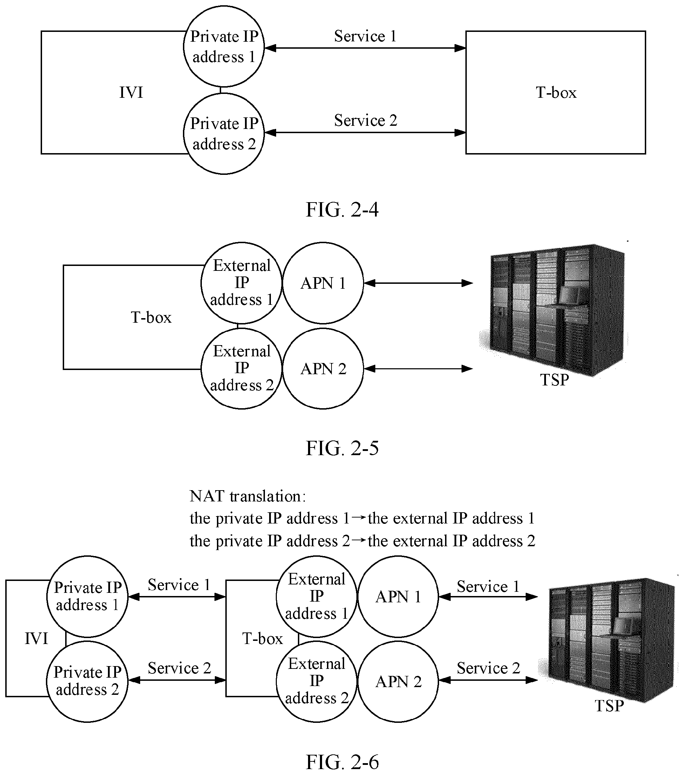

FIG. 2-3 is a schematic diagram in which a same APN collects statistics on data traffic of a plurality of services of IVI in the prior art;
FIG. 2-4 is a schematic diagram in which IVI separately performs different services by using a private IP address 1 and a private IP address 2;
FIG. 2-5 is a schematic diagram in which a T-box communicates with a TSP based on an APN 1 by using an external IP address 1 and based on an APN 2 by using an external IP address 2;
FIG. 2-6 is a schematic diagram in which a T-box translates, with each other, data packets between a private IP address and an external IP through NAT;

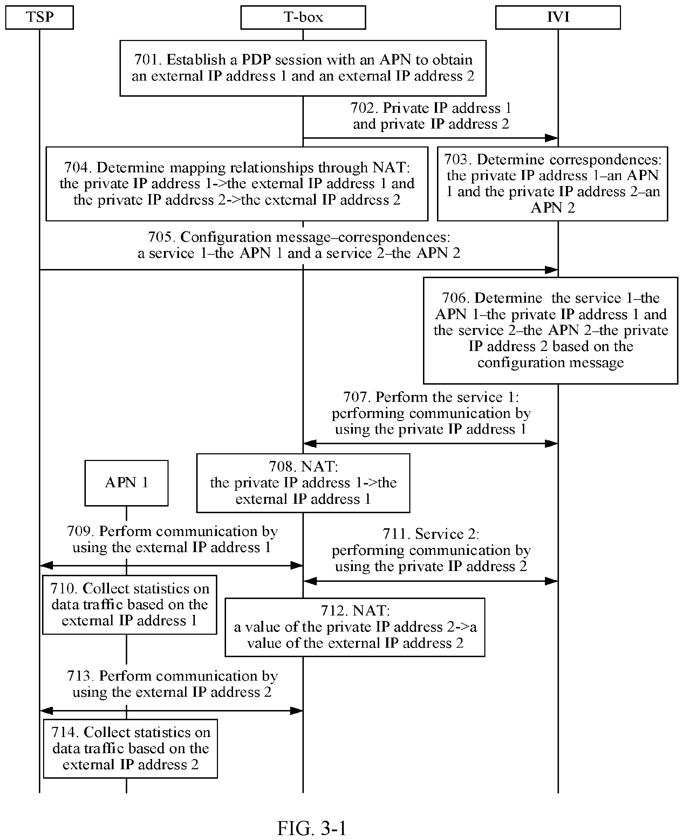

FIG. 3-1 is a schematic diagram of a traffic statistics collection method;

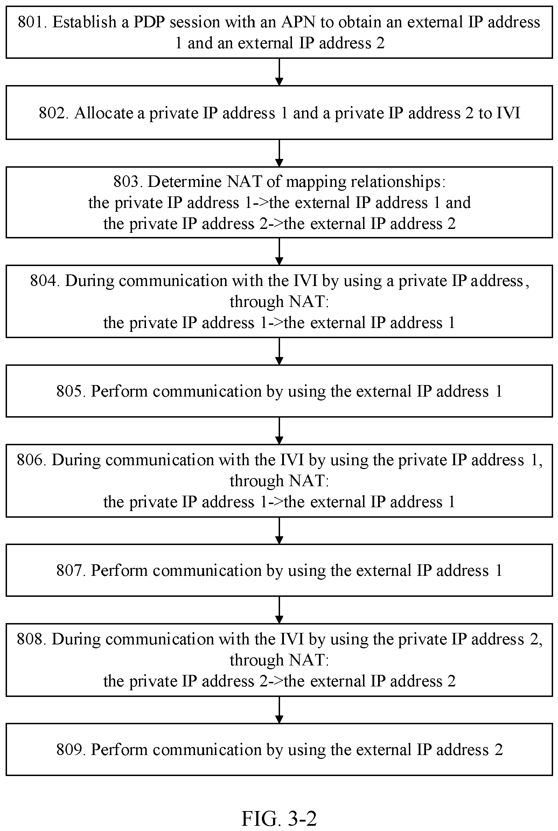

FIG. 3-2 is a schematic diagram of another traffic statistics collection method;

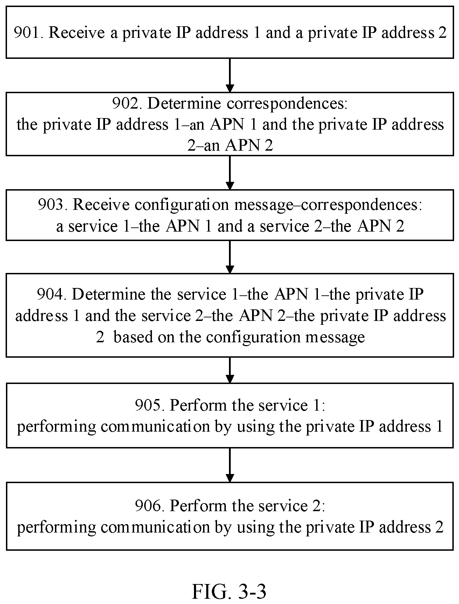

FIG. 3-3 is a schematic diagram of another traffic statistics collection method;

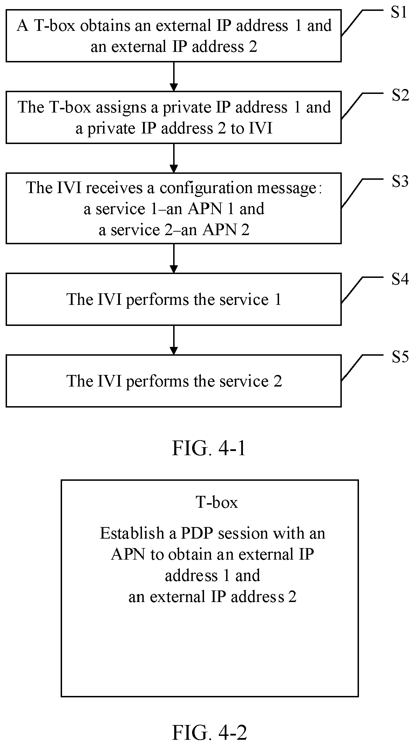

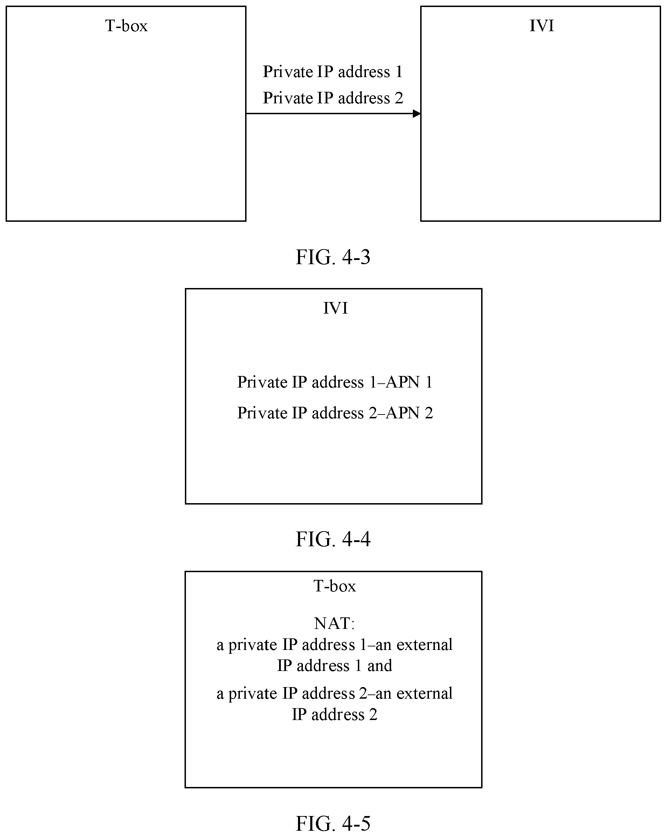

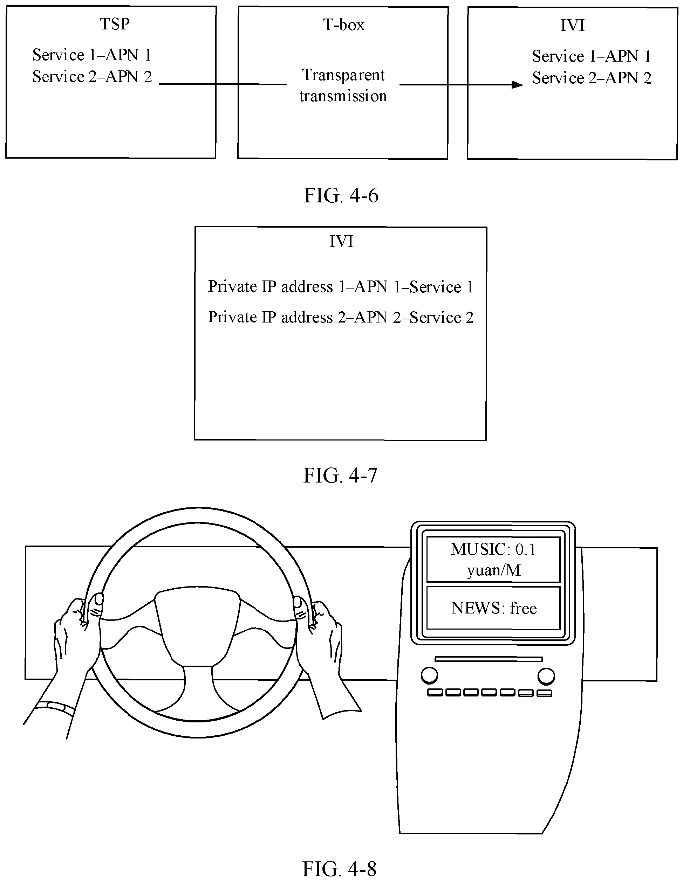

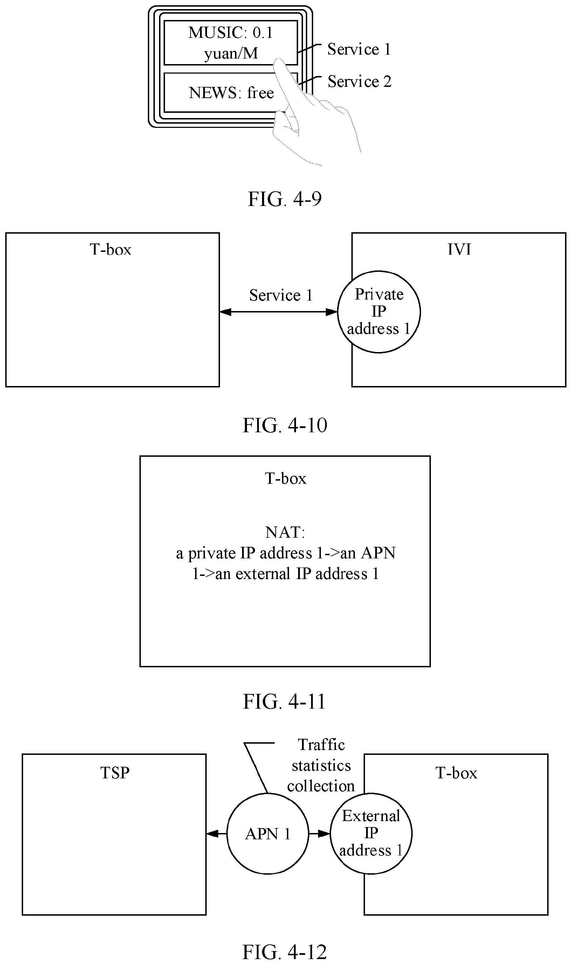

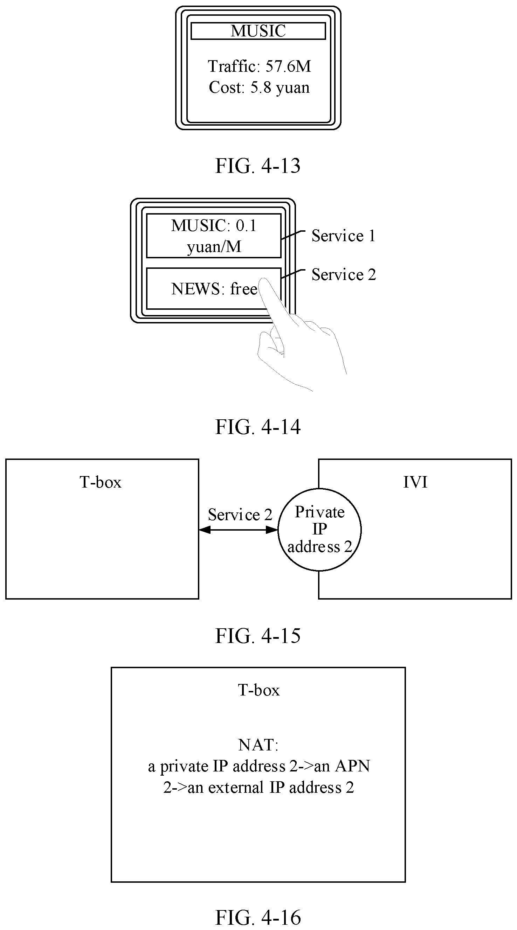

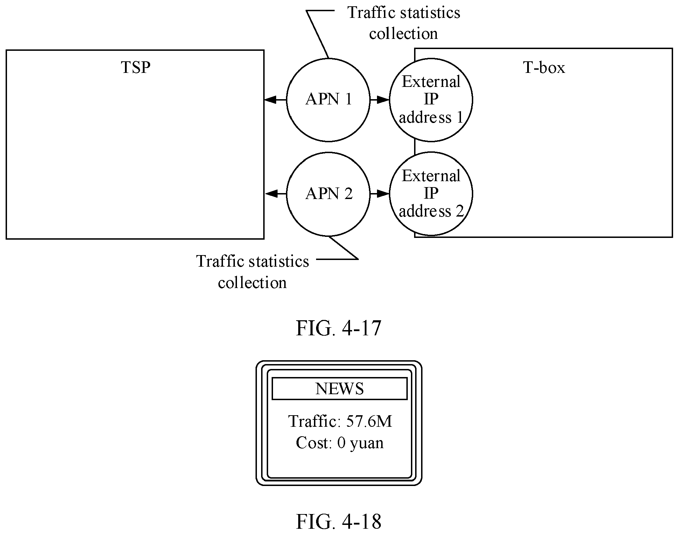

FIG. 4-1 is a schematic diagram of a method for using an in-vehicle infotainment interaction system by a user;
FIG. 4-2 is a schematic diagram in which a T-box obtains an external IP address 1 and an external IP address 2;
FIG. 4-3 is a schematic diagram in which a T-box assigns a private IP address 1 and a private IP address 2 to IVI;
FIG. 4-4 is a schematic diagram in which IVI determines correspondences of a private IP address 1-an APN 1 and a private IP address 2-an APN 2;
FIG. 4-5 is a schematic diagram in which a T-box determines a mapping relationship through NAT;
FIG. 4-6 is a schematic diagram in which a TSP sends a configuration message to IVI;
FIG. 4-7 is a schematic diagram in which the IVI determines correspondences of a private IP address 1-an APN 1-a service 1 and a private IP address 2-an APN 2-a service 2;
FIG. 4-8 is a schematic diagram in which IVI displays an optional service;
FIG. 4-9 is a schematic diagram in which a user selects a service 1;
FIG. 4-10 is a schematic diagram in which IVI communicates with a T-box by using a private IP address 1;
FIG. 4-11 is a schematic diagram in which a T-box translates a private IP address 1 into an external IP address 1 through NAT, and in this case, the T-box may communicate with a TSP based on an APN 1 by using an external IP address 1;
FIG. 4-12 is a schematic diagram of communication between a T-box and a TSP;
FIG. 4-13 is a schematic diagram of feedback after an APN 1 collects statistics on data traffic of a service 1;
FIG. 4-14 is a schematic diagram in which a user selects a service 2;
FIG. 4-15 is a schematic diagram in which IVI communicates with a T-box by using a private IP address 2;
FIG. 4-16 is a schematic diagram in which a T-box translates a private IP address 2 into an external IP address 2 through NAT;
FIG. 4-17 is a schematic diagram of communication between a T-box and a TSP; and
FIG. 4-18 is a schematic diagram of feedback after an APN 2 collects statistics on data traffic of a service 2.

### DESCRIPTION OF EMBODIMENTS

The following describes technical solutions in the embodiments of this application with reference to the accompanying drawings in the embodiments of this application. Apparently, the described embodiments are merely some but not all of the embodiments of this application.

In the specification, claims, and accompanying drawings of this application, the terms "first", "second", "third", "fourth", and the like (if existent) are intended to distinguish between similar objects but do not necessarily describe a specific order or sequence. It should be understood that the data termed in such a way are interchangeable in proper circumstances, so that the embodiments described herein can be implemented in an order other than the order illustrated or described herein. In addition, the terms "include", "have", and any other variants thereof are intended to cover non-exclusive inclusion, for example, a process, a method, a system, a product, or a device that includes a series of steps or units is not necessarily limited to the steps or units that are expressly listed, but may include another step or unit that is not expressly listed or inherent to the process, the method, the product, or the device.

As the internet of vehicles emerges, people have an increasingly higher requirement for in-vehicle infotainment, and T-boxes (Telematics Box, T-Box) are mounted on an increasing quantity of passenger cars, to provide rich content provider (Telematics Service Provider, TSP) services, such as remote control, remote diagnosis, and emergency call. The T-box can also provide a data service channel for IVI (In-Vehicle Infotainment, IVI), so that the IVI can also support the TSP services.

The T-box can select a corresponding external IP address based on a specific service to communicate with a TSP. For the IVI, an existing T-box can assign a private IP address to the IVI, so that when performing a service, the IVI can communicate with the T-box by using the private IP address. However, the IVI currently performs the service by using only one private IP address. Consequently, different services cannot be classified, and a requirement for charging through classification cannot be met. It should be noted that in the embodiments of this application, a private network may also be referred to as an internal network, and may be understood as a local area network in a specific area. An external network may also be referred to as a public network, and is not a local area network but a network connected to a public network.

In the technical solutions provided in the embodiments of this application, when the IVI performs a first service, the T-box communicates with the IVI by using a first private IP address, and the T-box communicates with the TSP by using a first APN and a first external IP address corresponding to the first private IP address. When the IVI performs a second service, the T-box communicates with the IVI by using a second private IP address, and the T-box communicates with the TSP by using a second APN and a second external IP address corresponding to the second private IP address. The first APN collects statistics on data traffic of the first service based on the first external IP address, and the second APN collects statistics on data traffic of the second service based on the second external IP address. Therefore, a problem that statistics on traffic of different services are separately collected is resolved.

Specifically, FIG. 1-1 is a schematic diagram of a traffic statistics collection method. The traffic statistics collection method includes the following steps:
101. When IVI performs a first service, a T-box may communicate with the IVI by using a first private IP address.

In a possible implementation, the IVI may receive an operation of a user through an interaction interface, and provide a plurality of services on an operation interface. The user may select the first service from the plurality of services. In this case, the IVI may determine a first APN based on the first service, and then determine the first private IP address based on the first APN, or obtain, from the T-box, the first private IP address corresponding to the first APN. The IVI communicates with the T-box by using the first private IP address.

102. The T-box may communicate with a content provider TSP by using the first APN and a first external IP address corresponding to the first private IP address.

Therefore, the T-box translates the first private IP address into the first external IP address through NAT, and communicates with the TSP by using the corresponding first APN and the first external IP address, so that the TSP provides a service of the first service for the user, and the first APN collects statistics on data traffic of the first service.

103. When the IVI performs a second service, the T-box may communicate with the IVI by using a second private IP address.

In a possible implementation, the user may select the second service. In this case, the IVI may determine a second APN based on the second service, and then determine the second private IP address based on the second APN, or obtain, from the T-box, the second private IP address corresponding to the second APN. The IVI communicates with the T-box based on the second private IP address.

104. The T-box may communicate with the TSP by using the second APN and a second external IP address corresponding to the second private IP address.

Therefore, the T-box translates the second private IP address into the second external IP address through NAT, and communicates with the TSP by using the corresponding second APN and the second external IP address, so that the TSP provides a service of the second service for the user, and the second APN collects statistics on data traffic of the second service.

The first APN collects statistics on data traffic of the first service based on the first external IP address, and the second APN collects statistics on data traffic of the second service based on the second external IP address. Therefore, a problem that an infotainment device separately collects statistics on traffic of different services is resolved.

In some possible implementations, the T-box receives a configuration message sent by the TSP, and forwards the configuration message to the IVI. The configuration message includes that the first service corresponds to the first APN and the second service corresponds to the second APN. Therefore, the TSP can dynamically adjust a correspondence between a service and an APN, to help a vehicle dealer flexibly adjust a service package rule, and cooperate with a business package plan. In some possible implementations, the T-box may be connected to the IVI through Wi-Fi or a USB, to implement a flexible connection between the T-box and the IVI.

The T-box may determine that the first private IP address, the first APN, and the first external IP address correspond to each other and the second private IP address, the second APN, and the second external IP address correspond to each other; and assign the first private IP address and the second private IP address to the IVI. Therefore, when the private IP address and the external IP address are changed, the APN may still correspond to a service used by the IVI, to collect statistics on data traffic of different services.

When the IVI performs the first service, the T-box may communicate with the IVI by using the first private IP address, so that the T-box can communicate with the TSP by using the first APN and the first external IP address corresponding to the first private IP address. However, when the IVI performs the second service, the T-box may communicate with the IVI based on the second private IP address, so that the T-box communicates with the TSP by using the second APN and the second external IP address corresponding to the second private IP address. In some possible implementations, the first service or the second service is a traffic free service and a traffic charging service, so that the TSP can perform different charging policies on different services.

The first APN collects statistics on data traffic of the first service based on the first external IP address, and the second APN collects statistics on data traffic of the second service based on the second external IP address. Therefore, a problem that the infotainment device separately collects statistics on traffic of different services is resolved.

FIG. 1-2 is a schematic diagram of another traffic statistics collection method. The traffic statistics collection method includes the following steps:
201. When performing a first service, IVI may communicate with a T-box by using a first private IP address, so that the T-box communicates with a content provider TSP by using a first APN and a first external IP address corresponding to the first private IP address.
202. When performing the second service, the IVI may communicate with the T-box by using a second private IP address, so that the T-box communicates with the TSP by using a second APN and a second external IP address corresponding to the second private IP address.

Because the first APN collects statistics on data traffic of the first service based on the first external IP address, and the second APN collects statistics on data traffic of the second service based on the second external IP address. Therefore, a problem that statistics on traffic of different services are separately collected is resolved.

In some possible implementations, the IVI may receive the first private IP address and the second private IP address that are assigned by the T-box. The IVI determines that the first private IP address corresponds to the first APN, and the second private IP address corresponds to the second APN, so that when the private IP address and the external IP address are changed, the APN may still be corresponding to a service used by the IVI, to implement statistics collection of data traffic performed by different APNs on different services. The T-box may be connected to the IVI through Wi-Fi or a USB, to implement a flexible connection between the T-box and the IVI.

When performing the first service, the IVI may communicate with the T-box by using the first private IP address, so that the T-box communicates with the TSP by using the first APN and the first external IP address corresponding to the first private IP address. When performing the second service, the IVI may communicate with the T-box based on the second private IP address, so that the first APN can collect statistics on data traffic of the first service based on the first external IP address, and the second APN collects statistics on data traffic of the second service based on the second external IP address. In this case, the infotainment device can separately collect statistics on traffic of different services. In some possible implementations, the first service or the second service may be a traffic free service or a traffic charging service, and therefore, the TSP may perform different charging policies on different services.

The IVI may receive a configuration message that is sent by the TSP and that is forwarded by the T-box. The configuration message includes that the first service corresponds to the first APN and the second service corresponds to the second APN. The TSP may dynamically adjust a correspondence between a service and an APN, to help a vehicle dealer flexibly adjust a service package rule, and cooperate with a business package plan.

Because the first APN collects statistics on data traffic of the first service based on the first external IP address, and the second APN collects statistics on data traffic of the second service based on the second external IP address, the infotainment device can separately collect statistics on traffic of different services.

FIG. 1-3 is a schematic diagram of another traffic statistics collection method. The traffic statistics collection method includes the following steps.
301. A T-box determines that a first private IP address, a first APN, and a first external IP address are corresponding to each other and a second private IP address, a second APN, and a second external IP address are corresponding to each other. Therefore, when the private IP address and the external IP address are changed, the APN may still be corresponding to a service used by the IVI, to collect statistics on data traffic of different services.
   In a possible implementation, the IVI may receive an operation of a user through an interactive interface, and provide a plurality of services on an operation interface. The user may select the first service from the plurality of services. In this case, the IVI may determine a first APN based on the first service, and then determine the first private IP address based on the first APN, or obtain, from the T-box, the first private IP address corresponding to the first APN. The IVI communicates with the T-box by using the first private IP address.
302. The T-box assigns the first private IP address and the second private IP address to the IVI.
303. The IVI determines that the first private IP address corresponds to the first APN and the second private IP address corresponds to the second APN. Therefore, the TSP may dynamically adjust a correspondence between a service and an APN, to help a vehicle dealer flexibly adjust a service package rule, and cooperate with a business package plan.
304. The T-box forwards, to the IVI, a configuration message sent by the content provider TSP, where the configuration message includes that the first service corresponds to the first APN and a second service corresponds to the second APN.
305. When the in-vehicle infotainment IVI system performs the first service, the telematics box T-box communicates with the IVI by using the first private IP address, and the T-box is connected to the IVI through Wi-Fi or a USB, to implement a flexible connection between the T-box and the IVI.

In a possible implementation, the IVI may receive an operation of the user through an interactive interface, and provide a plurality of services on an operation interface. The user may select the first service from the plurality of services. In this case, the IVI may determine the first APN based on the first service, and then determine the first private IP address based on the first APN, or obtain, from the T-box, the first private IP address corresponding to the first APN. The IVI communicates with the T-box by using the first private IP address.

306. The T-box communicates with the content provider TSP by using the first APN and the first external IP address corresponding to the first private IP address, where the first service or the second service is a traffic free service or a traffic charging service, and therefore, the TSP may perform different charging policies on different services.

In this way, the T-box translates the first private IP address into the first external IP through NAT, and communicates with the TSP by using the corresponding first APN and the first external IP address, so that the TSP provides a service of the first service for the user, and the first APN collects statistics on data traffic of the first service.

307. When the IVI performs the second service, the T-box communicates with the IVI based on the second private IP address.

In a possible implementation, the user may select the second service, and in this case, the IVI may determine the second APN based on the second service, and then determine the second private IP address based on the second APN, or obtain, from the T-box, the second private IP address corresponding to the second APN. The IVI communicates with the T-box based on the second private IP address.

308. The T-box communicates with the TSP by using the second APN and the second external IP address corresponding to the second private IP address.

In this way, the T-box translates the second private IP address into the second external IP through the NAT, and communicates with the TSP by using the corresponding second APN and the second external IP address, so that the TSP provides a service of the second service for the user, and the second APN collects statistics on data traffic of the second service.

Because the first APN collects statistics on data traffic of the first service based on the first external IP address, and the second APN collects statistics on data traffic of the second service based on the second external IP address, the infotainment device can separately collect statistics on traffic of different services.

FIG. 1-4 is a schematic diagram of a T-box 400. The T-box 400 includes a private network communications module 401 and an external network communications module 402. The private network communications module 401 is configured to: when IVI performs a first service, communicate with the IVI by using a first private IP address. The external network communications module 402 is configured to communicate with a content provider TSP by using a first APN and a first external IP address corresponding to the first private IP address. The private network communications module 401 is further configured to: when the IVI performs a second service, communicate with the IVI by using a second private IP address. The external network communications module 402 is further configured to communicate with the TSP by using a second APN and a second external IP address corresponding to the second private IP address.

Because the first APN collects statistics on data traffic of the first service based on the first external IP address, and the second APN collects statistics on data traffic of the second service based on the second external IP address, the infotainment device can separately collect statistics on traffic of different services.

In some possible implementations, the T-box 400 may further include a transceiver module 403, configured to forward, to the IVI, a configuration message sent by the TSP. The configuration message includes that the first service corresponds to the first APN and the second service corresponds to the second APN. Therefore, the TSP may dynamically adjust a correspondence between a service and an APN, to help a vehicle dealer flexibly adjust a service package rule, and cooperate with a business package plan.

In some possible implementations, the T-box 400 may further include a processor 404, configured to: determine that the first private IP address, the first APN, and the first external IP address are corresponding to each other and the second private IP address, the second APN, and the second external IP address are corresponding to each other; and assign the first private IP address and the second private IP address to the IVI. Therefore, when the private IP address and the external IP address are changed, the APN may still be corresponding to a service used by the IVI, to collect statistics on data traffic of different services.

FIG. 1-5 is a schematic diagram of IVI 500. The IVI 500 includes a processor 501 and a communications module 502. The processor 501 is configured to perform a first service and/or a second service. When the processor 501 performs the first service, the communications module 502 communicates with a T-box 400 by using a first private IP address. When the processor 501 performs the second service, the T-box 400 communicates with a content provider TSP by using a first APN and a first external IP address corresponding to the first private IP address. Alternatively, the communications module 502 communicates with the T-box by using a second private IP address, so that the T-box 400 communicates with the TSP by using the second APN and a second external IP address corresponding to the second private IP address.

The first external IP address is an external IP address of the telematics box and corresponds to the first private IP address. In addition, the first private IP address is a private IP address of an infotainment device, and the first private IP address corresponds to the first service. Therefore, when the first APN collects statistics on data traffic based on the first external IP address, statistics on data traffic of performing the first service by the infotainment device is collected. In this case, the infotainment device can separately collect statistics on traffic of different services.

In some possible implementations, the IVI 500 further includes a transceiver module 503, configured to: receive a configuration message that is sent by the TSP and that is forwarded by the T-box 400, where the configuration message includes that the first service corresponds to the first APN and the second service corresponds to the second APN, receive the first private IP address and the second private IP address that are assigned by the T-box 400, and determine that the first private IP address corresponds to the first APN, and the second private IP address corresponds to the second APN. Therefore, when the private IP address and the external IP address are changed, the APN may still be corresponding to a service used by the IVI 500, to collect statistics on data traffic of different services.

This application further provides a telematics box, applied to an in-vehicle service interaction system, where the telematics box includes:
one or more processors, a memory, a plurality of application programs, and one or more programs, where the one or more programs are stored in the memory, the one or more programs include an instruction, and when the instruction is executed by the electronic device, the electronic device is enabled to perform the following steps: when an in-vehicle infotainment IVI system performs a first service, communicating with the IVI by using a first private IP address, communicating with a content provider TSP by using a first APN and a first external IP address corresponding to the first private IP address, when the IVI performs a second service, communicating with the IVI by using a second private IP address, and communicating with the TSP by using a second APN and a second external IP address corresponding to the second private IP address. The first external IP address is an external IP address of the telematics box and corresponds to the first private IP address. In addition, the first private IP address is a private IP address of an infotainment device, and the first private IP address corresponds to the first service. Therefore, when the first APN collects statistics on data traffic based on the first external IP address, statistics on data traffic of performing the first service by the infotainment device is collected. In this case, the infotainment device can separately collect statistics on traffic of different services.

The T-box is connected to the IVI through Wi-Fi or a USB, to implement a flexible connection between the T-box and the IVI. The first service or the second service is a traffic free service or a traffic charging service, and therefore, the TSP may perform different charging policies on different services.

In some possible implementations, the at least one processor executes the several instructions to enable the input device to further perform the following step: forwarding, to the IVI, a configuration message sent by the TSP. The configuration message includes that the first service corresponds to the first APN and the second service corresponds to the second APN. Therefore, the TSP may dynamically adjust a correspondence between a service and an APN, to help a vehicle dealer flexibly adjust a service package rule, and cooperate with a business package plan.

In some possible implementations, the at least one processor executes the several instructions to enable the input device to further perform the following step: determining that the first private IP address, the first APN, and the first external IP address are corresponding to each other and the second private IP address, the second APN, and the second external IP address are corresponding to each other. Therefore, when the private IP address and the external IP address are changed, the APN may still be corresponding to a service used by the IVI, to collect statistics on data traffic of different services.

In some possible implementations, the at least one processor executes the several instructions to enable the input device to further perform the following step: assigning the first private IP address and the second private IP address to the IVI.

This application further provides an in-vehicle infotainment system, applied to an in-vehicle service interaction system, where the in-vehicle infotainment system includes:
one or more processors, a memory, a plurality of application programs, and one or more programs, where the one or more programs are stored in the memory, the one or more programs include an instruction, and when the instruction is executed by the electronic device, the electronic device is enabled to perform the following steps: when IVI performs a first service, communicating with a T-box by using a first private IP address, so that the T-box communicates with a content provider TSP by using a first APN and a first external IP address corresponding to the first private IP address. When performing the second service, the IVI communicates with the T-box by using a second private IP address, so that the T-box communicates with the TSP by using a second APN and a second external IP address corresponding to the second private IP address. The first external IP address is an external IP address of the telematics box and corresponds to the first private IP address. In addition, the first private IP address is a private IP address of an infotainment device, and the first private IP address corresponds to the first service. Therefore, when the first APN collects statistics on data traffic based on the first external IP address, statistics on data traffic of performing the first service by the infotainment device is collected. In this case, the infotainment device can separately collect statistics on traffic of different services.

In some possible implementations, the at least one processor executes the several instructions to enable the input device to further perform the following step: receiving a configuration message that is sent by the TSP and that is forwarded by the T-box. The configuration message includes that the first service corresponds to the first APN and the second service corresponds to the second APN. Therefore, the TSP may dynamically adjust a correspondence between a service and an APN, to help a vehicle dealer flexibly adjust a service package rule, and cooperate with a business package plan.

In some possible implementations, the at least one processor executes the several instructions to enable the input device to further perform the following step: receiving the first private IP address and the second private IP address that are assigned by the T-box.

In some possible implementations, the at least one processor executes the several instructions to enable the input device to further perform the following step: determining that the first private IP address corresponds to the first APN, and the second private IP address corresponds to the second APN. Therefore, when the private IP address and the external IP address are changed, the APN may still be corresponding to a service used by the IVI, to collect statistics on data traffic of different services.

This application further provides a computer program product. When the computer program product runs on an electronic device, a telematics box is enabled to perform the methods described in the foregoing steps.

This application further provides a computer program product. When the computer program product runs on an electronic device, the in-vehicle infotainment system is enabled to perform the methods described in the foregoing steps.

This application further provides a computer readable storage medium including an instruction. When the instruction runs on an electronic device, a telematics box is enabled to perform the methods described in the foregoing steps.

This application further provides a computer readable storage medium including an instruction. When the instruction runs on an electronic device, the in-vehicle infotainment system is enabled to perform the methods described in the foregoing steps.

The T-box 400 and the IVI 500 in the embodiments of this application may be terminals. The terminal may include components such as a radio frequency (Radio Frequency, RF) circuit, a memory, an input unit, a display unit, a sensor, an audio circuit, a wireless fidelity (wireless fidelity, Wi-Fi) module, a processor, and a power supply. A person skilled in the art may understand that the foregoing structure of a notebook computer imposes no limitation on the notebook computer, and the notebook computer may include more or fewer components, or may combine some components, or have different component arrangements.

FIG. 1-6 is a schematic diagram of components of a terminal. Details are as follows:
An RF circuit C-10 may be configured to receive and send information, or to receive and send a signal in a call process. Particularly, after receiving downlink information of a base station, the RF circuit C-10 sends the downlink information to a processor C-80 for processing. In addition, data designed for uplink transmission of the mobile phone is sent to the base station. Generally, the RF circuit C-10 includes but is not limited to an antenna, at least one amplifier, a transceiver, a coupler, a low noise amplifier (Low Noise Amplifier, LNA), a duplexer, and the like. In addition, the RF circuit C-10 may further communicate with a network and another device through wireless communication. The wireless communication may be performed by using any communications standard or protocol, including but not limited to a global system for mobile communications (Global System for Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

The memory C-20 may be configured to store a software program and a module. The processor C-80 runs the software program and the module stored in the memory C-20, to perform various function applications of the terminal and data processing. The memory C-20 may mainly include a storage program area and a storage data area, where the storage program area may store an operating system, an application program (for example, a sound play function or an image display function) required by at least one function, and the like. The data storage area may store data (such as sound data and a phonebook) created based on use of the terminal, and the like. In addition, the memory C-20 may include a high-speed random access memory, and may further include a nonvolatile memory, for example, at least one magnetic disk storage component, a flash memory component, or another nonvolatile solid-state storage component.

An input unit C-30 may be configured to: receive input digital or character information, and generate key signal input related to user setting and function control of the terminal. Specifically, the input unit C-30 may include a touch panel C-31 and other input devices C-32. The touch panel C-31, also referred to as a touchscreen, may collect a touch operation performed by a user on or near the touch panel (for example, an operation performed by the user on or near the touch panel C-31 by using any suitable object or accessory such as a finger or a stylus), and may drive a corresponding connection apparatus based on a preset program. Optionally, the touch panel C-31 may include two parts: a touch detection apparatus and a touch controller. The touch detection apparatus detects a touch location of the user, detects a signal brought by a touch operation, and transmits the signal to the touch controller. The touch controller receives touch information from the touch detection apparatus, translates the touch information into touch point coordinates, and sends the touch point coordinates to the processor C-80. In addition, the touch controller can receive and execute a command sent by the processor C-80. In addition, the touch panel C-31 may be implemented by using a plurality of types such as a resistive type, a capacitive type, an infrared type, and a surface acoustic wave type. In addition to the touch panel C-31, the input unit C-30 may include other input devices C-32. Specifically, the other input devices C-32 may include but are not limited to one or more of a physical keyboard, a function key (such as a volume control key or an on/off key), a trackball, a mouse, or a joystick.

A display unit C-40 may be configured to display information entered by the user or information provided for the user, and various menus of the terminal. The display unit C-40 may include a display panel C-41. Optionally, the display panel C-41 may be configured in a form such as a liquid crystal display (Liquid Crystal Display, LCD) or an organic light-emitting diode (Organic Light-Emitting Diode, OLED). Further, the touch panel C-31 may cover the display panel C-41. After detecting a touch operation on or near the touch panel C-31, the touch panel C-31 transmits the touch operation to the processor C-80 to determine a type of a touch event, and then the processor C-80 provides corresponding visual output on the display panel C-41 based on the type of the touch event. The touch panel C-31 and the display panel C-41 in FIG. 1-3 are used as two independent components to implement input and input functions of the terminal. However, in some embodiments, the touch panel C-31 and the display panel C-41 may be integrated to implement the input and output functions of the terminal.

The terminal may further include at least one type of sensor C-50, such as a light sensor, a motion sensor, and another sensor. Specifically, the light sensor may include an ambient light sensor and a proximity sensor. The ambient light sensor may adjust luminance of the display pane C-41 based on brightness of ambient light. The proximity sensor may turn off the display panel C-41 and/or backlight when the terminal moves to an ear. As a type of motion sensor, the acceleration sensor can detect a value of an acceleration in each direction (generally three axes), and detect a value and a direction of gravity when the acceleration sensor is static, and is applicable to an application for recognizing a terminal posture (for example, switching between a landscape screen and a portrait screen, a related game, and magnetometer posture calibration), a function related to vibration recognition (such as a pedometer or a knock), and the like. Other sensors such as a gyroscope, a barometer, a hygrometer, a thermometer, and an infrared sensor may also be configured on the terminal. Details are not described herein.

An audio circuit C-60, a loudspeaker C-61, and a microphone C-62 can provide an audio interface between the user and the terminal. The audio circuit C-60 may transmit, to the loudspeaker C-61, a received electrical signal converted from audio data, and the loudspeaker C-61 converts the electrical signal into a sound signal for outputting. In addition, the microphone C-62 converts a collected sound signal into an electrical signal, and the audio circuit C-60 receives the electrical signal, converts the electrical signal into audio data, and then outputs the audio data to the processor C-80 for processing. Then, the audio circuit C-60 sends the audio data to, for example, another terminal by using the RF circuit C-10, or outputs the audio data to the memory C-20 for further processing.

The Wi-Fi belongs to a short-range wireless transmission technology. By using a Wi-Fi module C-70, the terminal can help the user receive and send emails, browse web pages, access streaming media, and the like. The Wi-Fi module C-70 provides wireless broadband Internet access for the user. Although FIG. 1-3 shows the Wi-Fi module C-70, it may be understood that the Wi-Fi module C-70 is not a mandatory composition of the terminal, and may be omitted based on a requirement without changing the essential scope of the present invention.

The processor C-80 is a control center of the terminal, and connects all parts of the entire terminal by using various interfaces and lines. By running or executing a software program and/or a module stored in the memory C-20 and invoking data stored in the memory C-20, the processor C-80 performs various functions of the terminal and data processing, to perform overall monitoring on the terminal. Optionally, the processor C-80 may include one or more processing units. Preferably, the processor C-80 may integrate an application processor and a modem processor. The application processor mainly processes an operating system, a user interface, an application program, and the like. The modem processor mainly processes wireless communication. It may be understood that the foregoing modem processor may be not integrated into the processor C-80.

The terminal further includes a power supply C-90 (such as a battery) for supplying power to each component. Preferably, the power supply may be logically connected to the processor C-80 by using a power supply management system, thereby implementing functions such as charging, discharging, and power consumption management by using the power supply management system.

Although not shown in the figure, the terminal may further include a camera, a Bluetooth module, and the like. Details are not described herein.

In the technical solution provided in the embodiments of this application, the first external IP address is the external IP address of the telematics box and corresponds to the first private IP address. In addition, the first private IP address is the private IP address of an infotainment device, and the first private IP address corresponds to the first service. Therefore, when the first APN collects statistics on data traffic based on the first external IP address, statistics on data traffic of performing the first service by the infotainment device is collected. In this case, the infotainment device can separately collect statistics on traffic of different services.

The following is described with reference to a specific embodiment. FIG. 2-1 is a schematic architectural diagram of an in-vehicle infotainment interaction system. The in-vehicle infotainment interaction system includes a vehicle-mounted device of a vehicle and a vehicle remote service provider (Telematics Service Provider, TSP).

It should be noted that the TSP is configured to provide remote information processing for a vehicle user. In an industry chain of remote information processing, the TSP is in a core position. The TSP combines modern computer technologies such as a location service and a communications service, and provides services such as security, remote maintenance, weather, news, online music, and real-time navigation. In a possible implementation, the TSP is configured to exchange information with the vehicle-mounted device of the vehicle to provide a corresponding TSP service.

In a possible implementation, the vehicle-mounted device may include a T-box (Telematics BOX, T-box) and an in-vehicle infotainment (In-Vehicle Infotainment, IVI) device. In a possible implementation, the T-box may provide rich TSP services, such as remote control, remote diagnosis, and emergency call for the vehicle user, or may provide a data service channel for IVI, so that the IVI can support more online entertainment applications, such as online music, weather, news, real-time traffic, inbox, and stock. In this embodiment of this application, the T-box may provide a data service channel for the IVI, and may use a USB interface, for example, mapped to an ECM port in Linux, or an in-vehicle Ethernet interface, or may use another connection method, for example, wireless Wi-Fi transmission. This is not limited herein.

It should be noted that in a possible implementation, the T-box may include a packet data protocol (Packet Data Protocol, PDP) function, a router function, a NAT function, a double machine communications server, and a T-box service. The PDP function is used to establish a data service connection to an APN, and obtain an external IP from the APN, to implement communication connection to the TSP on LTE by using the external IP address. The PDP function may be implemented by using a PDP manager, and the PDP manager is mainly configured to manage a data service dialing policy and an APN. For example, the T-box establishes a PDP connection during startup to obtain an external IP address and is always kept activated. If the PDP connection is abnormally interrupted, a PDP connection is re-established. For interruption during which switching of operators is supported, the PDP manager is further configured to be responsible for switching of the APN, reconnection of a PDP connection, and the like. This is not limited herein.

A router of the T-box is configured to execute uplink and downlink data. The uplink data is data from a server to the T-box/IVI, and based on a destination IP address and a port number, a data packet is delivered to a corresponding application for processing. The uplink data is data from the T-box/IVI to the server, and based on a source IP address, a data packet is sent by using a corresponding PDP session (APN binding). In some possible implementations, the T-box may establish a mapping relationship between a private IP address and an external IP address of the IVI through NAT, translate a data packet of the private IP address into a data packet of the external IP address, and translate a data packet of the external IP address into a data packet of the private IP address.

In some possible implementations, the T-box may further include a double machine communications serving end, configured to: establish a local communication connection to a dual-computer communications client of the IVI, and process a data packet, for example, forward information such as an SMS or a configuration delivered by the TSP.

In some possible implementations, the T-box may interact with the user based on an interaction system of the T-box by using video and audio entertainment, touchscreen, and voice modules, a vehicle information displaying, and the like, and communicate with a mobile phone or a TSP by using a background system, so that the user obtains the vehicle information by using an application on the mobile phone and controls a vehicle-mounted device. Specifically, when the user sends, to the T-box, a control command specific to the T-box by using a mobile phone application, a TSP background sends a monitoring request instruction to the T-box. After obtaining the control command, the T-box sends a control packet by using a bus to control the vehicle-mounted device (including the IVI). Finally, an operation result is fed back to the mobile phone application of the user, for example, helping the user to remotely start a vehicle, enabling an air conditioner, and adjusting a seat to a proper location. This is not limited herein.

It should be noted that the APN refers to a network access technology in which a parameter needs to be configured when a network is accessed by using the terminal. The APN determines a specific access manner in which the terminal accesses the network. A user on the terminal may access a plurality of types of external networks, such as the Internet, a wap website, an internal network of a group enterprise, and an internal private network of an industry. Different access points may access a network in different ranges and in different access manners. To learn of a specific network to be accessed by a mobile phone after being activated, to assign an IP of a specific network segment, a network side needs to make a distinction by using the APN. In other words, the APN determines that the terminal can access a specific network in a specific access manner. In a possible implementation, the TSP communicates with the T-box by using an external IP assigned by the APN. It should be noted that the communication herein does not specify an upper-layer application protocol, such as TCP, UDP, HTTP, HTTPs, and MQTT, provided that a data service communication mode is used. This is not limited herein. In some possible implementations, the TSP may further communicate with the T-box by using IP/an SMS.

In some possible implementations, the IVI can provide a series of applications such as a TSP service and an online-based entertainment function such as three-dimensional navigation, a real-time traffic status, an IPTV, auxiliary driving, fault detection, vehicle information, vehicle body control, mobile office or wireless communication, thereby greatly improving vehicle electronic, networking, and intelligence levels. In a possible implementation, the IVI is a client for the T-box, and the T-box may assign one or more private IP addresses to the IVI, so that a network application on the IVI communicates with the TSP by using the T-box and the one or more private IP addresses. In a possible implementation, when a data packet sent by the IVI passes through the T-box, the T-box may translate a private IP address into an external IP by using a NAT function, and then send the external IP address to the TSP by using a communications module of the T-box. It should be noted that when the T-box receives data returned by the TSP, the NAT may translate the external IP address into a data packet of the private IP address. It should be noted that there may be at least two first private IP addresses, first external IPs, and first APNs and first private IP addresses, first external IPs, and first APNs in this application. To be specific, at least two private IP addresses, external IPs, and APNs can be simultaneously used to implement the method provided in this application.

In a possible implementation, the IVI may include a router, a double machine communications client, and an IVI service. The router of the IVI may be configured to: execute an uplink or a downlink data packet, for example, data from the T-box to the IVI, or from the IVI to the T-box, and deliver, based on a destination IP and a port number, a data packet to a corresponding application for processing.

The double machine communications client is configured to locally communicate with the T-box by using the IVI, for example, working with a background to configure the IVI, assign a private IP address, and the like. A first service of the IVI may include a service using the first APN, weather, news, illegal query, and the like. A second service using the first APN may include real-time traffic, online music, and the like.

It should be noted that the service herein and a binding relationship between the service and the APN are merely examples. An actual product needs to be implemented based on a service of a customer by binding a service defined by the customer and the APN.

It should be noted that for a service on the T-box, the T-box itself may identify different services. Therefore, for a specific service, a corresponding IP may be selected and sent based on a tariff package. However, for IVI, when the IVI needs to communicate with a T-box in the prior art to perform a related service, refer to FIG. 2-2. FIG. 2-2 is a schematic diagram of communication between IVI and a T-box in the prior art. Because the T-box assigns only one private IP address to the IVI, when the IVI performs a related service, the T-box collects statistics on traffic only by using the private IP address. Therefore, applications on the IVI are sent out by using one APN. The following is described by using an example in which a first service is a service 1, a second service is a service 2, a first APN is an APN 1, a second APN is an APN 2, a first private IP address 1 is a private IP address 1, a second private IP address is a private IP address 2, a first external IP address 1 is an external IP address 1, a first external IP address 2 is an external IP address 2. FIG. 2-3 is a schematic diagram in which one APN collects statistics on data traffic of the service 1 and the service 2 of IVI. Applications on the IVI cannot be identified. In other words, statistics collection and charging are performed on service traffic on the IVI based on a unified APN. Therefore, separate charging cannot be performed based on a service.

In this case, FIG. 2-4 is a schematic diagram in which the IVI uses a private IP address 1 and a private IP address 2 to separately perform different services. In a possible implementation, a T-box may assign two private IP addresses to the IVI, so that the IVI corresponds to two services based on the two assigned private IP addresses. Specifically, the IVI may pre-determine a correspondence between a service and a private IP before factory delivery according to a traffic classification rule, for example, an IP address 1-a service 1 and a private IP address 2-a service 2. When a plurality of private IP addresses assigned by the T-box are received, to be specific, when a value is assigned to a built-in private IP address, for example, a private IP address 1 = 192.168.0.1, a private IP address 2 = 192.168.0.2, and a private IP address 3 = 192.168.0.3, the private IP address corresponds to the service, for example, a private IP1-a service 1, and a private IP address 2-a service 2.

In a possible implementation, the T-box may generate two PDP sessions with two APNs to obtain two external IPs assigned by the two APNs, where the external IPs are in a one-to-one correspondence with the APNs, for example, an external IP address 1 = 172.16.0.1, an external IP address 2 = 172.16.0.2, an APN 1-an external IP address 1, and an APN 2-an external IP address 2. FIG. 2-5 is a schematic diagram in which the T-box communicates with a TSP based on an APN 1 by using an external IP address 1 and based on an APN 2 by using an external IP address 2. In this case, when the T-box needs to communicate with the TSP, the T-box may communicate with the TSP based on a corresponding APN by using one of a plurality of external IPs.

In a possible implementation, the T-box may establish mapping and translation relationships between a plurality of private IP addresses and the plurality of external IPs through network address translation (Network Address Translation, NAT). Specifically, FIG. 2-6 is a schematic diagram in which the T-box translates a data packet between a private IP address and an external IP through the NAT. In this embodiment, correspondences of the private IP address and the external IP address are a private IP address 1-an external IP address 1 and a private IP address 2-an external IP address 2. After translation succeeds, the data packet is sent to a TSP.

In a possible implementation, a background of the TSP is configured to interact with the T-box to implement a corresponding TSP service. The TSP may interact with the T-box by using IP/an SMS. In a possible implementation, the background of the TSP mainly focuses on dynamic configuration of a binding relationship between an IVI service and an APN. The TSP communicates with the T-box by using an external IP address. An upper-layer application protocol such as TCP, UDP, HTTP, HTTPs, or MQTT is not specified herein. A data service communication mode is applicable. This is not limited herein.

The following is described from a perspective of a work procedure of an in-vehicle infotainment interaction system. FIG. 3-1 is a schematic diagram of a traffic statistics collection method. The method specifically includes the following steps.

701. A T-box establishes a PDP session with an APN to obtain an external IP address 1 and an external IP address 2.

In a possible implementation, when the T-box needs to communicate with a TSP, the T-box needs to establish the PDP session with the APN to obtain the external IP address. In this embodiment of this application, an example in which PDP sessions are established with two APNs to obtain two external IPs is used for description. Specifically, the T-box may perform the PDP sessions with an APN 1 and an APN 2 to obtain the external IP address 1 and the APN 2, where the APN 1 corresponds to the external IP address 1 and the APN 2 corresponds to the external IP address 2. It should be noted that if the T-box restarts or is in another status, the T-box may re-establish a correspondence with the APN, for example, obtain a new external IP address 1' and a new external IP address 2'. Correspondences are that the APN 1 corresponds to the external IP address 1', and the APN 2 corresponds to the external IP address 2'.

It should be noted that, in this embodiment of this application, the APN is used to collect statistics on data traffic, and in this case, the APN may be corresponding to a service. To be specific, the APN is used to collect statistics on data traffic of a fixed service, so that when IVI uses the service, the APN may collect statistics on data traffic of the service.

702. The T-box assigns a private IP address 1 and a private IP address 2 to the IVI.

In a possible implementation, the T-box may assign a plurality of private IP addresses to the IVI. In this embodiment of this application, two private IP addresses are used as an example for description, for example, a private IP address 1 = 192.168.0.1 and a private IP address 2 = 192.168.0.2. After determining the two private IP addresses, the T-box may send the two private IP addresses to the IVI, so that the IVI determines the plurality of private IP addresses and APNs corresponding to the plurality of private IP addresses: the private IP address 1-the APN 1 and the private IP address 2-the APN 2.

It should be noted that, in this embodiment of this application, different services may share one private IP address, to be specific, collect statistics on data traffic by using a same APN, for example, classify services into a free service and a charged service, or a high-price service and a low-price service. This is not limited herein. For example, the free service may be a service with small traffic such as news or weather. The free service may be actually paid by a vehicle operator, may be free to a user. The charged service may be a service with large traffic such as music, video, and real-time navigation. In some possible implementations, services may alternatively be classified into different services based on another factor. This is not limited herein.

It should be noted that, generally, once the T-box assigns the private IP address 1 and the private IP address 2 to the IVI, the T-box does not change the private IP address. However, the private IP address may need to be changed due to some special statuses. In this embodiment of this application, the private IP address 1 may be changed into a private IP address 1', and the private IP address 2 may be changed into a private IP address 2'. In this case, the T-box may re-determine correspondences: the private IP address 1'-the APN 1 and the private IP address 2'-the APN 2. When the IVI performs a service 1, the IVI communicates with the T-box by using the private IP address 1', and the T-box may determine the APN 1 by using the private IP address 1'. In this case, statistics on data traffic of the service 1 may still be collected by using the APN 1, and is not affected by changing of the private IP address.

In some possible implementation, the T-box may assign the plurality of private IP addresses to the IVI to correspond to one APN. For example, the APN 1 corresponds to a private IP address 1-1, a private IP address 1-2, and a private IP address 1-3, and the APN 2 corresponds to a private IP address 2-1, a private IP address 2-2, and a private IP address 2-3. In this case, when the IVI needs to perform the service 1, the IVI may determine, based on the APN 1, that a private IP address that can be selected is a private IP address 1-1, a private IP address 1-2, and a private IP address 1-3. The IVI may select one from the private IP address 1-1, the private IP address 1-2, and the private IP address 1-3, for example, the private IP address 1-2, and communicate with the T-box by using the private IP address 1-2. In this case, the T-box may still determine a corresponding APN 1 and a corresponding external IP address 1 based on the private IP address 1-2, and may communicate with the TSP based on the APN 1 by using the external IP address 1. In this case, the APN 1 may still collect statistics on data traffic of executing the service 1 by the IVI.

703. The IVI determines correspondences: the private IP address 1-the APN 1 and the private IP address 2-the APN 2.

In this embodiment of this application, the T-box further notifies the IVI of a correspondence between the private IP address and the APN. For example, the private IP address 1 corresponds to the APN 1, and the private IP address 2 corresponds to the APN 2. In this way, when the IVI performs the service 1 by using the private IP address 1, data passes through the T-box, and the service 1 communicates with the TSP based on the APN 1 by using the external IP address 1, so that the APN 1 collects statistics on data traffic of performing the service 1 by the IVI. When the IVI performs a service 2 by using the private IP address 2, data passes through the T-box, and the service 2 communicates with the TSP based on the APN 2 by using the external IP address 2, so that the APN 2 collects statistics on data traffic of performing the service 2 by the IVI.

704. The T-box determines mapping relationships through NAT: the private IP address 1->the external IP address 1 and the private IP address 2->the external IP address 2.

In this embodiment of this application, after the T-box determines the private IP address 1 and the private IP address 2 and obtains the external IP address 1 and the external IP address 2, because the private IP address 1 corresponds to the APN 1, the private IP address 2 corresponds to the APN 2, the external IP address 1 corresponds to the APN 1, and the external IP address 2 corresponds to the APN 2, the private IP address 1 may be corresponding to the external IP address 1 based on the APN 1, and the private IP address 2 may be corresponding to the external IP address 2 based on the APN 2. Therefore, the mapping relationships through NAT can be obtained: the private IP address 1->the APN 1->the external IP address 1 and the private IP address 2->the APN 2->the external IP address 2. In this way, when receiving a private network data packet sent by the IVI by using the private IP address 1, the T-box translates the private network data packet into an external network data packet through the NAT, and sends the external network data packet to the TSP based on the APN 1 by using the external IP address 1. When receiving a private network data packet sent by the IVI by using the private IP address 2, the T-box translates the private network data packet into an external network data packet through the NAT, and sends the external network data packet to the TSP based on the APN 2 by using the external IP address 2.

705. The TSP sends configuration message-correspondences: the service 1-the APN 1 and the service 2-the APN 2 to the IVI by using the T-box.

In some possible implementations, the correspondence between the APN and the service may be preset in the IVI. In this case, when the IVI needs to perform the service 1, the IVI may determine the APN 1 based on the service 1, determine the private IP address based on the APN 1, and perform the service 1 by using the private IP address. In some possible implementations, alternatively, the TSP may actively deliver the configuration message-correspondences between the APN and the service: the service 1-the APN 1 and the service 2-the APN 2. In this way, the IVI can determine a corresponding APN and a corresponding private IP address based on a service that needs to be performed. In some possible implementations, alternatively, a correspondence between the APN and the service may be preset during factory setting. When the configuration message is received, the correspondence may be updated based on the configuration message, or the correspondence may not be preset. This is not limited herein. Therefore, the TSP can dynamically adjust the correspondence between the service and the APN, to help a vehicle dealer flexibly adjust a service package rule, and cooperate with a business package plan.

706. The IVI determines correspondences: the service 1-the APN 1-the private IP address 1 and the service 2-the APN 2-the private IP address 2 based on the configuration message.

In this embodiment of this application, after receiving the configuration message, the IVI may determine correspondences among the service, the APN, and the private IP address, to be specific, the service 1-the APN 1-the private IP address 1 and the service 2-the APN 2-the private IP address 2. After determining the correspondences among the service, the APN, and the private IP address, the IVI may select any service. The optional service includes a service 1-music (music) and a service 2-NEWS (news). It is assumed that a price of data traffic of the music is 0.1 yuan/M, and data traffic of the news is free. In this case, a user may select one service from the optional service based on a requirement. It should be noted that, in some possible implementations, the IVI may include a touchscreen, configured to interact with the user.

707. The IVI performs the service 1, and communicates with the T-box by using the private IP address 1.

In this embodiment of this application, the user may select the service 1 on the IVI. In this case, the IVI determines the APN 1 based on the correspondence and the service 1, determines the private IP address 1 based on the APN 1, and then communicates with the T-box by using the private IP address 1.

708. The T-box translates the private IP address 1 into the external IP address 1 through NAT.

In this embodiment of this application, when the IVI communicates with the T-box by using the private IP address 1, the T-box may determine the APN 1 through the NAT based on the private IP address 1, and then determine the external IP address 1. It should be noted that when receiving the private network data packet sent by the IVI, the T-box may translate the private network data packet into the external network data packet and send the external network data packet to the TSP In addition, when receiving a downlink external network data packet, the T-box may further translate the external network data packet into a private network data packet through the NAT, and deliver the private network data packet to the IVI.

709. The T-box communicates with the TSP based on the APN 1 by using the external IP address 1.

In this embodiment of this application, after determining that the APN 1 is determined based on the private IP address 1 and then the external IP address 1 is determined, the T-box may communicate with the TSP based on the APN 1 by using the external IP address 1.

710. The APN 1 collects statistics on data traffic based on the external IP address 1.

In this embodiment of this application, when data passes through the APN 1, the APN 1 may collect statistics on data traffic based on the external IP address 1. Because the external IP address 1 corresponds to the private IP address 1, and the private IP address 1 corresponds to the service 1, the APN 1 collects statistics on data traffic generated when the IVI uses the service 1. As described above, even if the private IP address 1 is changed into the private IP address 1' and/or the external IP address 1 is changed to the external IP address 1', the APN 1 may be corresponding to the service 1. In this case, the APN 1 may continue to collect statistics on data traffic of performing the service 1 by the IVI.

711. The IVI performs the service 2, and communicates with the T-box by using the private IP address 2.

In this embodiment of this application, the user may select the service 2 on the IVI. In this case, the IVI determines the APN 2 based on the correspondence and the service 2, determines the private IP address 2 based on the APN 2, and then communicates with the T-box by using the private IP address 2.

712. The T-box translates the private IP address 2 into the external IP address 2 through NAT.

In this embodiment of this application, when the IVI communicates with the T-box by using the private IP address 2, the T-box may determine the APN 2 through the NAT based on the private IP address 2, and then determine the external IP address 2. It should be noted that when receiving the private network data packet sent by the IVI, the T-box may translate the private network data packet into the external network data packet and send the external network data packet to the TSP. In addition, when receiving a downlink external network data packet, the T-box may further translate the external network data packet into a private network data packet through the NAT, and deliver the private network data packet to the IVI.

713. The T-box communicates with the TSP based on the APN 2 by using the external IP address 2.

In this embodiment of this application, after determining that the APN 2 is determined based on the private IP address 2 and then the external IP address 2 is determined, the T-box may communicate with the TSP based on the APN 2 by using the external IP address 2.

714. The APN 2 collects statistics on data traffic based on the external IP address 2.

In this embodiment of this application, when data passes through the APN 2, the APN 2 may collect statistics on data traffic based on the external IP address 2. Because the external IP address 2 corresponds to the private IP address 2, and the private IP address 2 corresponds to the service 2, the APN 2 collects statistics on data traffic generated when the IVI uses the service 2. As described above, even if the private IP address 2 is changed into the private IP address 2' and/or the external IP address 2 is changed to the external IP address 2', the APN 2 may be corresponding to the service 2. In this case, the APN 2 may continue to collect statistics on data traffic of performing the service 2 by the IVI.

Because the APN 1 collects statistics on data traffic of the service 1 by using the external IP address 1, and the APN 2 collects statistics on data traffic of the service 2 by using the external IP address 2, the infotainment device can separately collect statistics on traffic of different services.

The foregoing is described from a perspective of an interaction system. The following is described from a perspective of a T-box. FIG. 3-2 is a schematic diagram of another traffic statistics collection method, and the method includes the following steps:
801. A T-box establishes a PDP session with an APN to obtain an external IP address 1 and an external IP address 2.
802. The T-box assigns a private IP address 1 and a private IP address 2 to IVI.
803. The T-box determines mapping relationships through NAT: the private IP address 1->the external IP address 1 and the private IP address 2->the external IP address 2.
804. The IVI performs a service 1, and the T-box communicates with the IVI by using the private IP address 1.
805. The T-box translates the private IP address 1 into the external IP address 1 through NAT.
806. The T-box communicates with a TSP based on an APN 1 by using the external IP address 1.
807. The APN 1 collects statistics on data traffic based on the external IP address 1.
808. The T-box communicates with the TSP based on an APN 2 by using the external IP address 2.
809. The APN 2 collects statistics on data traffic based on the external IP address 2.

The external IP address 1 is an external IP address of the telematics box and corresponds to the private IP address 1. In addition, the private IP address 1 is a private IP address of an infotainment device, and the private IP address 1 corresponds to a first service. Therefore, when the APN 1 collects statistics on data traffic based on the external IP address 1, statistics on data traffic of performing the first service by the infotainment device is collected. In this case, the infotainment device can separately collect statistics on traffic of different services.

The following is described from a perspective of a T-box. FIG. 3-3 is a schematic diagram of another traffic statistics collection method, and the method includes the following steps:
901. A T-box assigns a private IP address 1 and a private IP address 2 to IVI.
902. The IVI determines correspondences: the private IP address 1-an APN 1 and the private IP address 2-an APN 2.
903. The TSP sends configuration message-correspondences: a service 1-the APN 1 and a service 2-the APN 2 to the IVI by using the T-box.
904. The IVI determines correspondences: the service 1-the APN 1-the private IP address 1 and the service 2-the APN 2-the private IP address 2 based on the configuration message.
905. The IVI performs the service 1, and communicates with the T-box by using the private IP address 1.
906. The IVI performs the service 2, and communicates with the T-box by using the private IP address 2.

The external IP address 1 is an external IP address of the telematics box and corresponds to the private IP address 1. In addition, the private IP address 1 is a private IP address of an infotainment device, and the private IP address 1 corresponds to a first service. Therefore, when the APN 1 collects statistics on data traffic based on the external IP address 1, statistics on data traffic of performing the first service by the infotainment device is collected. In this case, the infotainment device can separately collect statistics on traffic of different services.

The foregoing is described from the perspective of the work procedure of the in-vehicle infotainment interaction system, and the following is described by using a specific embodiment as an example.

In a possible implementation, a user may use a vehicle with a built-in in-vehicle infotainment interaction system. The in-vehicle infotainment interaction system includes an in-vehicle device and a TSP, and the in-vehicle device includes a T-box and IVI. The T-box is a telematics box, configured to communicate with the TSP, and provide a data channel for the IVI, so that when the IVI performs a service, the IVI communicates with the TSP by using the T-box. In some possible implementations, the IVI may provide services such as news, a weather report, a road status report, online music, and real-time call. In some possible implementations, different services have different requirements for communication quality and consume different amounts of data traffic. For a business reason, some vehicle operators may provide some free (actually paid by the vehicle operator) services (such as weather and news) with small traffic on the IVI for customers to attract more users. However, for some other services with larger traffic, such as online music and real-time navigation, the customers need to pay for the services. Therefore, a requirement for collecting statistics on IVI traffic through classification is generated. In this case, in some possible implementations, a service may be a free service, a traffic charging service, or a special charging service. Data traffic is very expensive. Therefore, the special charging service, for example, some video applications or online music applications, launches a charging manner that is more favorable than a mode of charging only by data traffic. For example, 2T traffic or unlimited traffic costs RMB 10 per month. This is not limited herein. In some other possible implementations, services may alternatively be distinguished in another manner. This is not limited herein.

In a possible implementation, because different data traffic charging modes need to be used for different services, statistics on data traffic of different services needs to be separately collected. In the current IVI, if the T-box performs a service, the T-box may first determine an APN related to the service, establish a PDP session with the APN to obtain a corresponding external IP address, and then perform the service based on the APN by using the external IP address. If the service is online music, after a session is established, a corresponding APN is determined. The external IP address is a data address of an external IP. In this case, the APN may collect statistics on data traffic based on the external IP address. It should be noted that the APN may not only carry online music, but may also serve as a radio or another service. However, the APN itself does not distinguish these services, but only collects statistics on traffic transmitted by the external IP address. The T-box needs to correspond to different external IPs for different services, to be specific, may separately collect statistics on data traffic of different services.

In a possible implementation, the IVI has a more powerful entertainment function than the T-box, and can be installed in a vehicle. The IVI is provided with a data service channel by using the T-box, to perform a related service such as a game, a video, news, a mailbox, and a stock. In a vehicle, a plurality of data service channels of the IVI can be provided by using a T-box, to support a plurality of IVI in working in the vehicle. Many services in the IVI also require separate statistics collection of data traffic. However, in an existing T-box and IVI, the IVI only has one private IP address. The T-box assigns a value to the private IP address to obtain the private IP address, so that the IVI performs all services by using the private IP address. In this case, the T-box cannot distinguish between different services and interact with the TSP based on a same APN by using a same external IP in a unified manner. Therefore, the APN cannot distinguish between different services, and cannot collect statistics on data traffic of different services.

In a current market, a T-box and IVI are integrated into one product. This is an early solution for an in-vehicle communications product. Therefore, the T-box does not need to assign a private IP address to the IVI, but directly uses an external IP address to perform a service, so that statistics on data traffic can be separately collected based on a service.

However, if the T-box and the IVI belong to one product, system development is more complex, and supporting a remote service causes higher power consumption and a longer delay. In addition, activating a terminal by using the remote service in the solution needs to wake up an entire system. In comparison with a separate T-box product, natural power consumption and a delay are increased. In addition, the T-box and the IVI have different security levels. The T-box carries services such as an emergency call, and requires higher reliability and security. In comparison, the IVI does not require reliability and security as high as the T-box. If an integrated system is developed and validated based on a requirement of the T-box, product costs are increased. In addition, because the IVI supports a relatively powerful function, a metal housing is usually used for better heat dissipation. This requires that a wireless communications module needs to use an external antenna, and requires relatively high product costs. In addition, an entire vehicle needs to reserve locations for a harness and an antenna. However, a separate T-box can use a built-in antenna provided that a proper heat dissipation measure is designed, thereby reducing product costs, and eliminating a need to reconstruct cables of the entire vehicle.

Currently, there may further be the following solution. A T-box and IVI are two different products. The T-box provides a data service for the IVI. Different services on the IVI access different server IPs (servers that provide services). By identifying a server IP, the different services pass through different T-boxes and are sent based on different APNs by using different external IPs, so that the APN collects statistics on data traffic of the services.

However, because the solution relies on a server IP corresponding to the provided service, for a specific service, a URL is usually used for a source address, and then a corresponding IP address is obtained by a DNS through parsing. A fixed URL may be applied, but the server IP may be changed due to reasons such as server reconstruction, network migration, or network structure changing. Therefore, if the solution is used, when the server IP is changed, statistics on data traffic cannot be accurately collected.

In conclusion, in a possible implementation, the vehicle operator uses the following solution: The T-box pre-configures a plurality of external IPs, and the IVI pre-configures a plurality of private IP addresses. In the in-vehicle infotainment interaction system including the T-box, the IVI, and the TSP, the private IP address, the APN, and the external IP address are in a one-to-one correspondence. The T-box may assign a value to the private IP address of the IVI. The T-box may obtain, by using the PDP session established with the APN, a value assigned to the external IP address, and may obtain the one-to-one correspondence of the private IP address, the APN, and the external IP address. To be specific, if the IVI performs the service 1 by using the private IP address 1, the T-box communicates with the TSP based on the APN 1 by using the external IP address 1. In this case, the APN 1 can collect statistics on data traffic of performing the service 1 by the IVI. It is expected that statistics on service traffic one the IVI can be collected through classification, to provide a basis for providing a service differentiated tariff package by the vehicle operator, meet a customer requirement, and attract more buyers. Implementation of the solution is independent of a server IP of an IVI service, and has good network adaptation (the solution is not affected when a network structure and a TSP service server change).

Specifically, FIG. 4-1 is a schematic diagram of a method for using an in-vehicle infotainment interaction system by a user.

S1. A T-box obtains an external IP address 1 and an external IP address 2.

In a possible implementation, when a user enables the T-box, the T-box may establish a PDP session with an APN to obtain an external IP address. In this embodiment of this application, an example in which PDP sessions are established with an APN 1 and an APN 2 is used for description to obtain the external IP address 1 and the external IP address 2. The APN 1 corresponds to the external IP address 1, and the APN 2 corresponds to the external IP address 2. FIG. 4-2 is a schematic diagram in which the T-box obtains the external IP address 1 and the external IP address 2. For example, the external IP address 1 may be 172.16.0.1, and the external IP address 2 may be 72.16.0.2.

Specifically, in a possible implementation, the T-box may perform a PDP session with one or more APNs to obtain a plurality of external IPs. In some possible implementations, the T-box may perform PDP sessions with a plurality of APNs in advance to obtain the plurality of external IPs. When the T-box needs to interact with the TSP, the T-box determines the APN based on the private IP address, determines the external IP address, and communicates with the TSP by using the external IP address. In some other possible implementations, the T-box may assign a private IP address to the IVI, perform a service 1 in the IVI, determine the required APN 1 by using the private IP1, determine a required external IP address 1, and then perform a PDP session with the APN 1 to obtain the external IP address 1.

It should be noted that, in this embodiment of this application, the APN is used to collect statistics on data traffic, and in this case, the APN may be corresponding to a service. To be specific, the APN is used to collect statistics on data traffic of a fixed service, so that when IVI uses the service, the APN may collect statistics on data traffic of the service.

In some possible implementations, the T-box may perform a PDP session with an APN in advance to obtain an external IP address, or may establish a PDP session with a corresponding APN only when the T-box needs to communicate with the TSP, to obtain an external IP address. This is not limited herein. For example, when the T-box communicates with the IVI by using the private IP address 1, the T-box determines the APN 1 based on the private IP address 1, the T-box establishes the PDP session with the APN 1 to obtain the external IP address 1, and then communicates with the TSP based on the APN 1 by using the external IP address 1.

It should be noted that each time the T-box is enabled, the T-box re-establishes a PDP session with the APN to obtain a new external IP address. In some possible implementations, the T-box may re-establish a PDP session with the APN to obtain a new external IP address, for example, separately establish a PDP session with the APN 1 and the APN 2 to obtain an external IP address 1' and an external IP address 2', to update correspondences of the external IP1'-the APN 1 and the external IP address 2'-the APN 2.

S2. The T-box assigns a private IP address 1 and a private IP address 2 to the IVI.

In a possible implementation, after enabling the IVI, the user may use a function of the IVI, such as an online game function. It is assumed that the online game function is a service 1, and a news function is a service 2, the IVI needs to first obtain private IP addresses corresponding to the service 1 and the service 2. In this embodiment of this application, the T-box may assign a private IP address, such as the private IP address 1 and the private IP address 2, to the IVI, and notify the IVI of the APN 1 and the APN 2 respectively corresponding to the private IP address 1 and the private IP address 2. In some possible implementations, the T-box may actively assign the private IP address 1 to the IVI. Alternatively, the IVI may actively request the T-box. Alternatively, the private IP address 1 may be preset before factory delivery. This is not limited herein. In this case, the T-box may determine correspondences: the private IP address 1-the APN 1-the external IP address 1 and the private IP address 2-the APN 2-the external IP address 2.

It should be noted that, in some possible implementations, data of the T-box and the IVI may be connected by using a USB (mapping to an ECM port in Linux) or through the in-vehicle Ethernet, Wi-Fi wireless connection, or the like, provided that a data service channel can be established on a T-box end and an IVI end. This is not limited herein.

FIG. 4-3 is a schematic diagram in which the T-box assigns the private IP address 1 and the private IP address 2 to the IVI. For example, the private IP address 1 = 192.168.0.1, and the private IP address 2 = 192.168.0.2. After the private IP address 1 and the private IP address 2 are sent to the IVI, the APN 1 and the APN 2 respectively corresponding to the private IP address 1 and the private IP address 2 may further be notified. FIG. 4-4 is a schematic diagram in which the IVI determines the correspondences of the private IP address 1-the APN 1 and the private IP address 2-the APN 2. The IVI may perform the service 1 by using the private IP address 1 and perform the service 2 by using the private IP address 2.

It should be noted that, in this embodiment of this application, different services may share one private IP address, to be specific, collect statistics on data traffic by using a same APN, for example, classify services into a free service and a charged service, or a high-price service and a low-price service. This is not limited herein. For example, the free service may be a service with small traffic such as news or weather. The free service may be actually paid by a vehicle operator, may be free to a user. The charged service may be a service with large traffic such as music, video, and real-time navigation. In some possible implementations, services may alternatively be classified into different services based on another factor. This is not limited herein.

In a possible implementation, the IVI may select, based on a specific service, to use one of the private IP addresses such as the private IP address 1 and the service 1 to communicate with the T-box. The T-box may communicate with the IVI by using the private IP address 1. However, the IVI needs a service provided by the TSP Therefore, the IVI needs to communicate with the TSP by using the T-box. In this case, the T-box communicates with the TSP by using the external IP address 1 corresponding to the APN 1, so that the APN 1 collects statistics on passed data traffic by using the external IP address 1.

It should be noted that, generally, once the T-box assigns the private IP address 1 and the private IP address 2 to the IVI, the T-box does not change the private IP address. However, the private IP address may need to be changed due to some special statuses. In this embodiment of this application, the private IP address 1 may be changed into a private IP address 1', and the private IP address 2 may be changed into a private IP address 2'. In this case, the T-box may re-determine correspondences: the private IP address 1'-the APN 1 and the private IP address 2'-the APN 2. When the IVI performs a service 1, the IVI communicates with the T-box by using the private IP address 1', and the T-box may determine the APN 1 by using the private IP address 1'. In this case, statistics on data traffic of the service 1 may still be collected by using the APN 1, and is not affected by changing of the private IP address.

In some possible implementation, the T-box may assign the plurality of private IP addresses to the IVI to correspond to one APN. For example, the APN 1 corresponds to a private IP address 1-1, a private IP address 1-2, and a private IP address 1-3, and the APN 2 corresponds to a private IP address 2-1, a private IP address 2-2, and a private IP address 2-3. In this case, when the IVI needs to perform the service 1, the IVI may determine, based on the APN 1, that a private IP address that can be selected is a private IP address 1-1, a private IP address 1-2, and a private IP address 1-3. The IVI may select one from the private IP address 1-1, the private IP address 1-2, and the private IP address 1-3, for example, the private IP address 1-2, and communicate with the T-box by using the private IP address 1-2. In this case, the T-box may still determine a corresponding APN 1 and a corresponding external IP address 1 based on the private IP address 1-2, and may communicate with the TSP based on the APN 1 by using the external IP address 1. In this case, the APN 1 may still collect statistics on data traffic of using the service 1 by the IVI.

When determining the private IP address 1 and the external IP address 1 corresponding to the APN 1 and the private IP address 2 and the external IP address 2 corresponding to the APN 2, the T-box may determine mapping relationships through NAT: the private IP address 1-the external IP address 1 and the private IP address 2-the external IP address 2. FIG. 4-5 is a schematic diagram in which the T-box determines the mapping relationships through NAT. The NAT is configured to: when a data packet of the private IP address is received, translate the data packet into a data packet of the external IP address. Otherwise, when a data packet of the external IP address is received, the data packet is translated into a data packet of the private IP through the NAT.

In some possible implementations, the T-box may re-determine the plurality of private IP addresses, such as the private IP address 1', the private IP address 2', and the private IP address 3', and send the plurality of private IP addresses to the IVI again, so that the IVI updates correspondences of the private IP address 1'-the APN 1, the private IP address 2'-the APN 2, and the private IP address 3'-the APN 3.

S3. The IVI receives a configuration message: the service 1-the APN 1, and the service 2-the APN 2.

In a possible implementation, a service corresponds to an APN. To be specific, different APNs collect statistics on data traffic of different services, for example, the APN 1-the service 1 and the APN 2-the service 2. In some possible implementations, an IVI end may pre-determine a correspondence between the APN and the service, or the TSP may send a configuration message to the IVI, where the configuration message includes a correspondence between the service and the APN. Specifically, after determining that the service 1 corresponds to the APN 1 and the service 2 corresponds to the APN 2, the TSP may generate a configuration message, and then send the configuration message to the IVI by using the T-box. FIG. 4-6 is a schematic diagram in which the TSP sends the configuration message to the IVI. FIG. 4-7 is a schematic diagram in which the IVI determines correspondences of the private IP address 1-the APN 1-the service 1 and the private IP address 2-the APN 2-the service 2.

When the IVI needs to perform the service 1, the IVI may determine the APN 1 based on the service 1, determine the private IP address 1 based on the APN 1, and communicate with the T-box by using the private IP address 1. Therefore, in a possible implementation, the TSP may dynamically adjust the correspondence between the service and the APN, to help a vehicle dealer flexibly adjust a service package rule, and cooperate with a business package plan.

S4. The IVI performs the service 1.

In a possible implementation, FIG. 4-8 is a schematic diagram in which the IVI displays an optional service. The IVI may receive an operation of a user over an interactive interface. An operation interface provides a plurality of services, and the user may select the service 1 from the plurality of services. In this case, the IVI may determine the APN 1 based on the service, and then determine the private IP address 1 based on the APN 1, or obtain, from the T-box, the private IP address 1 corresponding to the APN 1, and communicate with the T-box by using the private IP address 1, so that the T-box translates the private IP address 1 into the external IP address 1 through NAT. Then, the T-box communicates with the TSP based on the corresponding APN 1 by using the external IP address 1, so that the TSP provides a service of the service 1 for the user and the APN 1 collects statistics on data traffic of the service 1.

In a possible implementation, when the IVI displays an interface related to one or more services, the user can select one of the services. FIG. 4-9 is a schematic diagram in which the user selects the service 1, for example, selects the service 1 (MUSIC). It is assumed that the service 1 is a charging service with a price of 0.1 yuan/M. In this case, the IVI may perform the service 1. Specifically, the IVI determines the APN 1 by using the service 1, determines the private IP address 1 by using the APN 1, and communicates with the T-box by using the private IP address 1. FIG. 4-10 is a schematic diagram in which the IVI communicates with the T-box by using the private IP address 1. The T-box determines the APN 1 based on the private IP address 1 through NAT, and further determines the external IP address 1. FIG. 4-11 is a schematic diagram in which the T-box translates the private IP address 1 into the external IP address 1 through NAT. The T-box may communicate with the TSP based on the APN 1 by using the external IP address 1. FIG. 4-12 is a schematic diagram in which the T-box communicates with the TSP. The APN 1 may collect statistics on passed data traffic based on the external IP address 1 to obtain corresponding data traffic of performing the service 1 by the IVI. FIG. 4-13 is a schematic diagram of feedback after the APN 1 collects statistics on data traffic of the service 1.

S5. The IVI performs the service 2.

In a possible implementation, the user may select the service 2. In this case, the IVI may determine the APN 2 based on the service 2, and then determine the private IP address 2 based on the APN 2, or obtain, from the T-box, the private IP address 2 corresponding to the APN 2, and communicate with the T-box by using the private IP address 2, so that the T-box translates the private IP address 2 into the external IP address 2 through NAT. Then, the T-box communicates with the TSP based on the corresponding APN 2 by using the external IP address 2, so that the TSP provides a service of the service 2 for the user and the APN 2 collects statistics on data traffic of the service 2.

In a possible implementation, when the IVI displays an interface related to one or more services, the user can select one of the services. FIG. 4-14 is a schematic diagram in which the user selects the service 2, for example, selects the service 2 (MUSIC). It is assumed that the service 2 is a charging service with a price of 0.2 yuan/M. In this case, the IVI may perform the service 2. Specifically, the IVI determines the APN 2 by using the service 2, determines the private IP address 2 by using the APN 2, and communicates with the T-box by using the private IP address 2. FIG. 4-15 is a schematic diagram in which the IVI communicates with the T-box by using the private IP address 2. The T-box determines the APN 2 based on the private IP address 2 through NAT, and further determines the external IP address 2. FIG. 4-16 is a schematic diagram in which the T-box translates the private IP address 2 into the external IP address 2 through NAT. The T-box may communicate with the TSP based on the APN 2 by using the external IP address 2. FIG. 4-17 is a schematic diagram in which the T-box communicates with the TSP. The APN 2 may collect statistics on passed data traffic based on the external IP address 2 to obtain corresponding data traffic of performing the service 2 by the IVI. FIG. 4-18 is a schematic diagram of feedback after the APN 2 collects statistics on data traffic of the service 2.

In this embodiment of this application, when communicating with the IVI by using the private IP, the T-box may simultaneously determine two external IPs and two APNs, and simultaneously communicate with the TSP, so that the two APNs respectively calculate data traffic of different services. If the user wants to simultaneously read news and listen to music online, where the news belongs to the service 2, and the online music belongs to the service 2, the IVI can simultaneously perform two services by using the private IP address 2 and the private IP address 2.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer readable storage medium or may be transmitted from one computer readable storage medium to another computer readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible to the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like.

## Claims

1. A traffic statistics collection method, applied to an in-vehicle service interaction system, wherein the method comprises:
when an in-vehicle infotainment IVI system performs a first service, communicating, by a telematics box T-box, with the IVI by using a first private IP address, and
communicating, by the T-box, with a content provider TSP by using a first APN and a first external IP address corresponding to the first private IP address; and
when the IVI performs a second service, communicating, by the T-box, with the IVI by using a second private IP address, and
communicating, by the T-box, with the TSP by using a second APN and a second external IP address corresponding to the second private IP address.

2. The method according to claim 1, wherein the method further comprises:
forwarding, by the T-box to the IVI, a configuration message sent by the content provider TSP, wherein the configuration message comprises that the first service corresponds to the first APN and the second service corresponds to the second APN.

3. The method according to claim 1 or 2, wherein the T-box is connected to the IVI through Wi-Fi or a USB.

4. The method according to any one of claims 1 to 3, wherein the first service or the second service is a traffic free service or a traffic charging service.

5. The method according to any one of claims 1 to 4, wherein the method further comprises:
determining, by the T-box, that the first private IP address, the first APN, and the first external IP address are corresponding and the second private IP address, the second APN, and the second external IP address are corresponding.

6. The method according to any one of claims 1 to 5, wherein the method further comprises:
assigning, by the T-box, the first private IP address and the second private IP address to the IVI.

7. A traffic statistics collection method, applied to an in-vehicle service interaction system, wherein the method comprises:
when IVI performs a first service, communicating, by the IVI, with a T-box by using a first private IP address, so that the T-box communicates with a content provider TSP by using a first APN and a first external IP address corresponding to the first private IP address; and
when the IVI performs a second service, communicating, by the IVI, with the T-box by using a second private IP address, so that the T-box communicates with the TSP by using a second APN and a second external IP address corresponding to the second private IP address.

8. The method according to claim 7, wherein the method further comprises:
receiving, by the IVI, a configuration message that is sent by the TSP and that is forwarded by the T-box, wherein the configuration message comprises that the first service corresponds to the first APN and the second service corresponds to the second APN.

9. The method according to claim 7 or 8, wherein the T-box is connected to the IVI through Wi-Fi or a USB.

10. The method according to any one of claims 7 to 9, wherein the first service or the second service is a traffic free service and a traffic charging service.

11. The method according to any one of claims 7 to 10, wherein the method further comprises:
receiving, by the IVI, the first private IP address and the second private IP address that are assigned by the T-box.

12. The method according to any one of claims 7 to 11, wherein the method further comprises:
determining, by the IVI, that the first private IP address corresponds to the first APN and the second private IP address corresponds to the second APN.

13. A telematics box, applied to an in-vehicle service interaction system, wherein the telematics box comprises:
a private network communications module, configured to: when IVI performs a first service, communicate with the IVI by using a first private IP address; and
an external network communications module, configured to communicate with a content provider TSP by using a first APN and a first external IP address corresponding to the first private IP address, wherein
the private network communications module is further configured to: when the IVI performs a second service, communicate with the IVI by using a second private IP address; and
the external network communications module is further configured to communicate with the TSP by using a second APN and a second external IP address corresponding to the second private IP address.

14. The telematics box according to claim 13, wherein the telematics box further comprises:
a transceiver module, configured to forward, to the IVI, a configuration message sent by the TSP, wherein the configuration message comprises that the first service corresponds to the first APN and the second service corresponds to the second APN.

15. The telematics box according to claim 13 or 14, wherein the telematics box further comprises:
a processor, configured to determine that the first private IP address, the first APN, and the first external IP address correspond to each other and the second private IP address, the second APN, and the second external IP address correspond to each other.

16. The telematics box according to any one of claims 13 to 15, wherein
the processor is further configured to assign the first private IP address and the second private IP address to the IVI.

17. An in-vehicle infotainment system, applied to an in-vehicle service interaction system, wherein the in-vehicle infotainment system comprises:
a processor, configured to perform a first service and/or a second service; and
a communications module, configured to: when the processor performs the first service, communicate with a T-box by using a first private IP address, so that the T-box communicates with a content provider TSP by using a first APN and a first external IP address corresponding to the first private IP address, wherein
the communications module is further configured to: when the processor performs the second service, communicate with the T-box by using a second private IP address, so that the T-box communicates with the TSP by using a second APN and a second external IP address corresponding to the second private IP address.

18. The in-vehicle infotainment system according to claim 17, wherein the in-vehicle infotainment system further comprises:
a transceiver module, configured to receive a configuration message that is sent by the TSP and that is forwarded by the T-box, wherein the configuration message comprises that the first service corresponds to the first APN and the second service corresponds to the second APN.

19. The in-vehicle infotainment system according to claim 17 or 18, wherein
the transceiver module is further configured to receive the first private IP address and the second private IP address that are assigned by the T-box.

20. The in-vehicle infotainment system according to any one of claims 17 to 19, wherein
the processor is further configure to determine that the first private IP address corresponds to the first APN and the second private IP address corresponds to the second APN.

21. A telematics box, applied to an in-vehicle service interaction system, wherein the telematics box comprises:
one or more processors;
a memory;
a plurality of application programs; and
one or more programs, wherein the one or more programs are stored in the memory, the one or more programs comprise an instruction, and when the instruction is executed by the electronic device, the electronic device is enabled to perform the following steps:
when an in-vehicle infotainment IVI system performs a first service, communicating with the IVI by using a first private IP address, and
communicating with a content provider TSP by using a first APN and a first external IP address corresponding to the first private IP address; and
when the IVI performs a second service, communicating with the IVI by using a second private IP address, and
communicating with the TSP by using a second APN and a second external IP address corresponding to the second private IP address.

22. The telematics box according to claim 21, wherein the at least one processor executes the several instructions, so that the input device further performs the following step:
forwarding, to the IVI, a configuration message sent by the TSP, wherein the configuration message comprises that the first service corresponds to the first APN and the second service corresponds to the second APN.

23. The telematics box according to claim 21 or 22, wherein the at least one processor executes the several instructions, so that the input device further performs the following step:
determining that the first private IP address, the first APN, and the first external IP address correspond to each other and the second private IP address, the second APN, and the second external IP address correspond to each other.

24. The telematics box according to any one of claims 21 to 23, wherein the at least one processor executes the several instructions, so that the input device further performs the following step:
assigning the first private IP address and the second private IP address to the IVI.

25. An in-vehicle infotainment system, applied to an in-vehicle service interaction system, wherein the in-vehicle infotainment system comprises:
one or more processors;
a memory;
a plurality of application programs; and
one or more programs, wherein the one or more programs are stored in the memory, the one or more programs comprise an instruction, and when the instruction is executed by the electronic device, the electronic device is enabled to perform the following steps:
when IVI performs a first service, communicating with a T-box by using a first private IP address, so that the T-box communicates with a content provider TSP by using a first APN and a first external IP address corresponding to the first private IP address; and
when the IVI performs a second service, communicating with the T-box by using a second private IP address, so that the T-box communicates with the TSP by using a second APN and a second external IP address corresponding to the second private IP address.

26. The in-vehicle infotainment system according to claim 25, wherein the at least one processor executes the several instructions, so that the input device further performs the following step:
receiving a configuration message that is sent by the TSP and that is forwarded by the T-box, wherein the configuration message comprises that the first service corresponds to the first APN and the second service corresponds to the second APN.

27. The in-vehicle infotainment system according to claim 25 or 26, wherein the at least one processor executes the several instructions, so that the input device further performs the following step:
receiving the first private IP address and the second private IP address that are assigned by the T-box.

28. The in-vehicle infotainment system according to any one of claims 25 to 27, wherein the at least one processor executes the several instructions, so that the input device further performs the following step:
determining that the first private IP address corresponds to the first APN and the second private IP address corresponds to the second APN.

29. A computer program product, wherein when the computer program product runs on an electronic device, a telematics box is enabled to perform the method according to any one of claims 1 to 6.

30. A computer program product, wherein when the computer program product runs on an electronic device, an in-vehicle infotainment system is enabled to perform the method according to any one of claims 7 to 12.

31. A computer readable storage medium, comprising an instruction, wherein when the instruction runs on an electronic device, the telematics box is enabled to perform the method according to any one of claims 1 to 6.

32. A computer readable storage medium, comprising an instruction, wherein when the instruction runs on an electronic device, the in-vehicle infotainment system is enabled to perform the method according to any one of claims 7 to 12.
